# EUROPEAN PATENT SPECIFICATION

(11) **EP 1 892 400 B1**
(45) Date of publication and mention of the grant of the patent: **22.07.2009**
(21) Application number: 07114015.6
(22) Date of filing: 08.08.2007
(51) Int. Cl.: F02D 21/08, F02M 25/07

(54) **Exhaust purification system of internal combustion engine, and control method of the system**
Abgasreinigungssystem eines Verbrennungsmotors und Steuerverfahren des Systems
Système de purification d'échappement d'un moteur à combustion interne, et procédé de contrôle du système

(30) Priority: 08.08.2006 JP 2006215654
(43) Date of publication of application: 27.02.2008
(73) Proprietor: TOYOTA JIDOSHA KABUSHIKI KAISHA, Toyota-shi, Aichi-ken, 471-8571 (JP)
(72) Inventor: Murata, Hiroki, Toyota-Shi, Aichi-Ken 471-8571 (JP); Nagae, Masahiro, Toyota-Shi, Aichi-Ken 471-8571 (JP)
(74) Representative: Intes, Didier Gérard André

(56) References cited:
- US-A1- 2005 188 695
- US-A1- 2006 016 180

## Description

### BACKGROUND OF THE INVENTION

### 1. Field of the Invention

The invention relates to an exhaust purification system of an internal combustion engine, and a control method of the system.

### 2. Description of the Related Art

There are known exhaust purification devices for internal combustion engines, such as a particulate filter (hereinafter, referred to as "filter") that traps particulate matter (hereinafter, referred to as "PM") produced in the combustion process of the engine, a storage reduction type NOx catalyst (hereinafter, referred to as "NOx catalyst") that stores and reduce nitrogen oxides (hereinafter, referred to as "NOx"), etc.

While the filter is in use, the PM trapped from exhaust gas accumulates on the filter. If a large amount of PM accumulates on the filter, the pressure loss on the filter increases. Therefore, occasionally, the PM accumulated on the filter needs to be removed from the filter by oxidizing the PM. For example, there is a known technology of oxidizing and removing the PM deposited on the filter by carrying out a temperature-raising process of raising the temperature of the filter in a forced fashion.

Examples of the temperature-raising process include a method in which, separately from the main fuel injection performed to generate torque, subsidiary fuel injection is performed so as to raise the temperature of exhaust gas and therefore raise the temperature of the filter, a method in which the filter is loaded with an oxidation catalyst or an oxidation catalyst is disposed at a site preceding the filter, and a reducing agent, such as a fuel or the like, is directly added into exhaust gas, so that reaction heat generated in the oxidation/reduction reactions of the reducing agent on the oxidation catalyst raises the temperature of the exhaust gas that flows into the filter, and therefore raises the temperature of the filter, etc.

The NOx catalyst has a property of storing sulfur oxides (hereinafter, referred to as "SOx") from exhaust gas by a mechanism substantially the same as the mechanism of storing NOx from exhaust gas. As SOx is stored in the NOx catalyst, the NOx storing capability of the NOx catalyst declines. Therefore, the SOx stored in the NOx catalyst needs to be removed from the NOx catalyst as appropriate. There is a known technology of removing SOx from a NOx catalyst by raising the temperature of the NOx catalyst in a forced fashion, similarly to the case where the PM deposited on the filter is oxidized.

As for a technology of reducing the amount of NOx produced in the combustion process of an internal combustion engine, there is a known technology of recirculating a portion of exhaust gas into combustion chambers of the internal combustion engine (hereinafter, referred to as "EGR control").

In recent years, as a technology that allows EGR control to be performed in a wider region of operation, there has been developed a technology which includes a high-pressure EGR device that performs EGR control via a high-pressure EGR passage connecting an exhaust passage upstream of the turbine of a turbocharger and an intake passage downstream of the compressor of the turbocharger, and a low-pressure EGR device that performs EGR control via a low-pressure EGR passage connecting the exhaust passage downstream of the turbine and the intake passage upstream of the compressor, and which performs EGR control by switching between the high-pressure EGR device and the low-pressure EGR device or using the two EGR devices in combination in accordance with the state of operation of the internal combustion engine (e.g., see Japanese Patent Application Publication No. JP-A-2005-127247).

In the case where the temperature-raising process is carried out on the filter or the NOx catalyst, the temperature of the exhaust gas recirculated into the internal combustion engine via the high-pressure EGR passage (hereinafter, referred to as "high-pressure EGR gas") or the temperature the exhaust gas recirculated into the internal combustion engine via the low-pressure EGR passage (hereinafter, referred to as "low-pressure EGR gas") sometimes becomes excessively high.

For example, if the subsidiary fuel injection is performed as a temperature-raising process, the temperature of the combustion chambers becomes high, so that engine members around the combustion chambers, such as an engine head or the like, have high temperatures. Therefore, in a construction in which the high-pressure EGR passage connects the exhaust manifold and the intake manifold of an internal combustion engine and the high-pressure EGR passage is provided adjacent to the engine head, high temperature of the engine head causes the temperature of the high-pressure EGR passage to be high. Therefore, insufficient cooling of the high-pressure EGR gas results, and the temperature of the high-pressure EGR gas becomes high. Besides, if the subsidiary fuel injection is performed, the temperature of the exhaust gas discharged from the internal combustion engine becomes high, so that the temperature of high-pressure EGR gas and/or the temperature of low-pressure EGR gas tends to become high.

During the execution of a process of oxidizing the PM deposited on the filter through the temperature-raising process (hereinafter, referred to as "filter regeneration process"), the temperature of the filter becomes high due to the reaction heat from the oxidizing reactions of PM. Therefore, in some cases, the exhaust gas passing through the filter is heated, and the temperature of the exhaust gas flowing out of the filter becomes high. Therefore, in a construction where the low-pressure EGR passage branches from the exhaust passage downstream of the exhaust purification device, such as a filter, a NOx catalyst or the like, and connects to the intake passage, high-temperature exhaust gas flows into the low-pressure EGR passage during the filter regeneration process.

Furthermore, when a process of releasing the SOx stored in the NOx catalyst through the temperature-raising process (hereinafter, referred to as "sulfur poisoning recovery process") is being carried out, or when the state of operation of the internal combustion engine has returned to an ordinary state of operation after the sulfur poisoning recovery process, the high temperature of the engine head and exhaust gas caused by the temperature-raising process gives increase to a possibility of the high-pressure EGR gas temperature becoming high.

When the temperature of high-pressure EGR gas becomes high, the temperature of the gas taken into the combustion chambers becomes high, thus giving increase to a risk of increase of the amount of smoke or NOx produced in the combustion process. Besides, there also is a possibility of a fault occurring in the operation of a flow amount regulator valve that adjusts the amount of exhaust gas that flows through the high-pressure EGR passage.

When the temperature of the low-pressure EGR gas becomes high, the temperature of the gas that flows into the compressor becomes high, thus giving increase to a risk of a fault occurring in the compressor. Besides, there also is a possibility of a fault occurring in the operation of a flow amount regulator valve that adjusts the amount of exhaust gas that flows through the low-pressure EGR passage.

To cope with these problems or the like, it is conceivable to reduce the high-pressure EGR gas amount or the low-pressure EGR gas amount during a period during which the temperature-raising process or the filter regeneration process is being performed, and to return the high-pressure EGR gas amount or the low-pressure EGR gas amount to the previous amount after the temperature-raising process or the filter regeneration process have ended.

However, due to the heat capacities of the exhaust purification devices, such as the filter, the NOx catalyst, etc., or of the engine members, such as the engine head or the like, the high-temperature state of the engine head or the exhaust purification device continues for a while even after the temperature-raising process has ended.

For example, if the filter regeneration process is performed in an exhaust purification system that includes a filter as an exhaust purification device, the end of execution of the filter regeneration process is followed by a time delay before the temperature of the filter returns to a filter temperature that occurs at an ordinary time (at a time point preceding the carrying out of the filter regeneration process). Therefore, even after the execution of the filter regeneration process ends, the temperature of the exhaust gas that flows out of the filter is high during a period that corresponds to the time delay. Therefore, if the low-pressure EGR is performed at this time, low-pressure EGR gas whose temperature is high passes through the low-pressure EGR passage.

Similarly, in the case where the subsidiary fuel injection is performed as a temperature-raising process, there also exists a time delay from the end of execution of the temperature-raising process until the temperature of the engine members caused to be high by the execution of the subsidiary fuel injection returns to a temperature of the engine members that occurs at an ordinary time (when the subsidiary fuel injection is not performed). Therefore, the high-temperature state of the engine members continues for a while following the end of execution of the temperature-raising process. Therefore, even after the execution of the temperature-raising process ends, performance of the high-pressure EGR during a period that corresponds to the time delay will result in high-temperature high-pressure EGR gas flowing through the high-pressure EGR passage.

Thus, it is considered that the temperature of the exhaust gas that flows in the high-pressure EGR passage or the temperature of the exhaust gas that flows into the low-pressure EGR passage continues to be in a high-temperature range for a while following the end of the pressure raise process. Therefore, if the reduction of the high-pressure EGR gas amount or the low-pressure EGR gas amount is discontinued at the time point of the end of the temperature-raising process, the exhaust gas whose temperature is still high flows through the high-pressure EGR passage or the low-pressure EGR passage in an amount that is equivalent to the amount of gas that flows through the high-pressure or low-pressure EGR passage at an ordinary time (when the temperature-raising process is not performed).

In this case, there is a risk that the temperature of high-pressure EGR gas or the temperature of low-pressure EGR gas may become excessively high, and the amount of production of smoke or NOx may increase, or a fault may occur in the flow amount regulator valve provided on the high-pressure EGR passage or the low-pressure EGR passage, the impeller of the compressor, etc.

### SUMMARY OF THE INVENTION

This invention provides an exhaust purification system and its control method in which recirculation of exhaust gas is performed via an EGR passage. This invention restrains the occurrence of a fault in the intake system or the EGR system caused by high-temperature exhaust gas when a temperature-raising process is performed on an exhaust purification device.

A first aspect of the invention is an exhaust purification system of an internal combustion engine, including an EGR passage that connects an exhaust passage of the internal combustion engine and an intake passage of the internal combustion engine; EGR gas amount determination means for determining a basic amount of EGR gas recirculated into the internal combustion engine via the EGR passage in accordance with a state of operation of the internal combustion engine; an exhaust purification device provided in the exhaust passage; and temperature raise means for performing a temperature-raising process of raising a temperature of the exhaust purification device, the exhaust purification system characterized by including: determination means for determining whether or not a temperature of EGR gas is above a predetermined reference temperature; and correction means for decreasing the amount of EGR gas from the basic amount of EGR gas determined by the EGR gas amount determination means, during a period that it is determined by the determination means that the temperature of EGR gas is above the reference temperature after the temperature-raising process ends.

According to this construction, after the execution of the temperature-raising process ends, the EGR gas amount is decreased from or made less than the basic EGR gas amount during the period that it is determined that the temperature of EGR gas is above the predetermined reference temperature. Therefore, although the execution of the temperature-raising process causes the temperature of EGR gas to be high, recirculation of a large amount of high-temperature exhaust gas into the internal combustion engine via the EGR passage is restrained during a period that a high-temperature state of EGR gas having temperature above the reference temperature continues following the end of the temperature-raising process.

This will restrain an event in which a fault occurs in the EGR system (e.g., a valve provided on the EGR passage for adjusting the amount of flow of EGR gas, an EGR cooler for cooling EGR gas, etc.) or in the intake system (e.g., the compressor or the intercooler of the turbocharger, etc.) or the amount of production of smoke or NOx increases after the end of execution of the temperature-raising process.

The aforementioned reference temperature is a temperature that is determined beforehand on the basis of an upper-limit value of the temperature of EGR gas that will not cause any of various faults as mentioned above with regard to the intake system or exhaust emission. For example, the reference temperature is set at a temperature value obtained by subtracting a predetermined safety margin from the aforementioned upper-limit value.

The determination means may be any means as long as the means makes it possible to determine whether or not the temperature of EGR gas is above the reference temperature. An example of the determination means may be means for estimating or detecting an absolute value of the EGR gas temperature, and comparing it with the reference temperature.

The determination means may also be means for estimating which one of predetermined temperature regions the EGR gas temperature belongs to. The predetermined temperature regions are, for example, temperature regions that are determined beforehand through experiments of the like, such as a region of EGR gas temperature in which there is a risk of occurrence of faults as mentioned above (hereinafter, referred to as "high-temperature region"), a region of EGR gas temperature that occurs when the temperature-raising process is not being carried out (hereinafter, referred to as "ordinary region"), etc. In this case, the reference temperature is set at a boundary temperature between the high-temperature region and the ordinary region.

The invention may be applied to an exhaust purification system of an internal combustion engine that includes a turbocharger that has a compressor on the intake passage of the internal combustion engine and has a turbine on the exhaust passage of the internal combustion engine, an exhaust purification device provided in the exhaust passage downstream of the turbine, and a low-pressure EGR passage that connects the exhaust passage downstream of the exhaust purification device and the intake passage upstream of the compressor.

In this case, the determination means determines whether or not the temperature of the low-pressure EGR gas recirculated into the internal combustion engine via the low-pressure EGR passage is above a reference temperature, and the correction means decreases the low-pressure EGR gas from the basic amount of low-pressure EGR gas determined by the EGR gas amount determination means, during a period that it is determined by the determination means that the temperature of the low-pressure EGR gas is above the reference temperature after the temperature-raising process ends.

That is, the execution of the temperature-raising process causes the temperature of low-pressure EGR gas to be high, and during the period that a high-temperature state of the low-pressure EGR gas continues following the end of the temperature-raising process, the low-pressure EGR gas amount is decreased by the correction means. As a result, recirculation of a large amount of high-temperature exhaust gas via the low-pressure EGR passage is restrained.

Therefore, it is possible to restrain the occurrence of a fault such as an operation failure of a flow amount regulator valve that adjusts the low-pressure EGR gas amount, an EGR cooler that cools the low-pressure EGR gas, etc., an operation failure of a turbocharger due to excessively high temperature of the gas that flows into the compressor of the turbocharger, etc.

The invention may also be applied to an exhaust purification system of an internal combustion engine that includes a turbocharger that has a compressor on an intake passage of the internal combustion engine and has a turbine on an exhaust passage of the internal combustion engine, and a high-pressure EGR passage that connects the exhaust passage upstream of the turbine and the intake passage downstream of the compressor.

In this case, the determination means determines whether or not the temperature of the high-pressure EGR gas recirculated into the internal combustion engine via the high-pressure EGR passage is above a reference temperature, and the correction means decreases the high-pressure EGR gas amount from the basic amount of high-pressure EGR gas determined by the EGR gas amount determination means, during a period that it is determined by the determination means that the temperature of high-pressure EGR gas is above the reference temperature after the temperature-raising process ends.

That is, the execution of the temperature-raising process causes the temperature of high-pressure EGR gas to be high, and during the period that a high-temperature state of the high-pressure EGR gas continues following the end of the temperature-raising process, the high-pressure EGR gas amount is decreased by the correction means. As a result, recirculation of a large amount of high-temperature exhaust gas via the high-pressure EGR passage is restrained.

Therefore, it becomes possible to restrain the occurrence of a fault, such as an operation failure of a flow amount regulator valve that regulates the high-pressure EGR gas amount, an operation failure of an EGR cooler that cools the high-pressure EGR gas, etc.

The invention may also be applied to an exhaust purification system of an internal combustion engine that includes a low-pressure EGR passage and a high-pressure EGR passage, and EGR switching means for recirculating exhaust gas to the internal combustion engine by selectively using one or both of the low-pressure EGR passage and the high-pressure EGR passage in accordance with the state of operation of the internal combustion engine.

In such an exhaust purification system, the EGR switching means divides the state of operation of the internal combustion engine into a region of operation state in which the recirculation of exhaust gas is performed by using only the high-pressure EGR passage (hereinafter, referred to as "high-pressure EGR region"), a region of operation state in which the recirculation of exhaust gas is performed by using both the high-pressure EGR region and the low-pressure EGR passage (hereinafter, referred to as "mixed EGR region"), a region of operation state in which the recirculation of exhaust gas is performed by using only the low-pressure EGR passage (hereinafter, referred to as "low-pressure EGR region"), and a region of operation state in which the recirculation of exhaust gas is not performed. In accordance with the region to which the state of operation of the internal combustion engine belongs to, the EGR switching means recirculates exhaust gas to the internal combustion engine by switching between the low-pressure EGR passage and the high-pressure EGR passage or using both passages.

In this construction, the EGR gas amount determination means determines a basic amount of the low-pressure EGR gas amount (hereinafter, referred to as "basic low-pressure EGR gas amount") and a basic amount of the high-pressure EGR gas amount (hereinafter, referred to as "basic high-pressure EGR gas amount") in accordance with the state of operation of the internal combustion engine. Then, the correction means corrects the low-pressure EGR gas amount or the high-pressure EGR gas amount in accordance with the state of operation of the internal combustion engine, the temperature of low-pressure EGR gas, and the temperature of high-pressure EGR gas.

For example, the correction means causes the low-pressure EGR gas amount to be decreased from or less than the basic low-pressure EGR gas amount, during a period that it is determined by the determination means that the temperature of low-pressure EGR gas is above a predetermined first reference temperature, if the state of operation of the internal combustion engine belongs to the low-pressure EGR region or the mixed EGR region.

The aforementioned first reference temperature is a temperature that is determined beforehand on the basis of an upper-limit value of the low-pressure EGR gas temperature that does not pose any risk of causing a fault in the flow amount regulator valve or the EGR cooler provided on the low-pressure EGR passage, or the compressor provided on the intake passage, etc.

That is, the execution of the temperature-raising process causes the temperature of low-pressure EGR gas to be high, and during the period that a high-temperature state of the low-pressure EGR gas having temperature above the first reference temperature continues following the end of the temperature-raising process, the low-pressure EGR gas amount is decreased by the correction means, so that recirculation of a large amount of high-temperature exhaust gas into the internal combustion engine via the low-pressure EGR passage can be restrained. Therefore, it is possible to restrain the event in which a fault is caused in the intake system or the EGR system by high-temperature exhaust gas.

Furthermore, the correction means causes the high-pressure EGR gas amount to be decreased from or less than the basic high-pressure EGR gas amount, during a period that it is determined by the determination means that the temperature of the high-pressure EGR gas is above a predetermined second reference temperature, if the state of operation of the internal combustion engine belongs to the high-pressure EGR region or the mixed EGR region.

The aforementioned second reference temperature is a temperature that is determined beforehand on the basis of an upper-limit value of the high-pressure EGR gas temperature that does not pose any risk of causing a fault in the flow amount regulator valve or the EGR cooler provided on the high-pressure EGR passage, etc.

That is, the execution of the temperature-raising process causes the temperature of high-pressure EGR gas to be high, and during the period that a high-temperature state of the high-pressure EGR gas having temperature above the second reference temperature continues following the end of the temperature-raising process, the high-pressure EGR gas amount is decreased by the correction means, so that recirculation of a large amount of high-temperature exhaust gas into the internal combustion engine via the high-pressure EGR passage can be restrained. Therefore, it is possible to restrain the event in which a fault is caused in the intake system or the EGR system by high-temperature exhaust gas.

Incidentally, the amount of NOx produced in the combustion process of a fuel in the internal combustion engine is dependent mainly on the temperature and the EGR rate of intake gas. Generally, the amount of NOx production tends to increase as the EGR rate of intake gas decreases. Furthermore, the amount of NOx production tends to increase as the temperature of intake gas increases.

Therefore, if in the foregoing construction, the low-pressure EGR gas amount (or the high-pressure EGR gas amount) is decreased for correction, the EGR rate of intake gas taken into the internal combustion engine decreases, so that there is a possibility of increase in the amount of NOx production.

After the execution of the temperature-raising process ends, either one of the temperature of high-pressure EGR gas and the temperature of low-pressure EGR gas can possibly become high. Depending on the temperature condition of the temperature of high-pressure EGR gas (or low-pressure EGR gas), the decrease in the EGR rate of intake gas caused by the decrease correction of the low-pressure EGR gas amount (or the high-pressure EGR gas amount) can sometimes cancelled out by increasing the high-pressure EGR gas amount (or the low-pressure EGR gas amount), so that increase in the amount of NOx production can be restrained. Such a temperature condition of the high-pressure EGR gas (or the low-pressure EGR gas) is herein referred to as a "high-pressure EGR increase permission condition" (or "low-pressure EGR increase permission condition").

Therefore, when the low-pressure EGR gas amount is decreased for correction by the foregoing construction while the state of operation of the internal combustion engine belongs to the mixed EGR region, the decrease in the EGR rate can be canceled out to restrain increase in the amount of NOx production by increasing the high-pressure EGR gas amount provided that the temperature of the high-pressure EGR gas satisfies the high-pressure EGR increase permission condition.

Furthermore, when the high-pressure EGR gas amount is decreased for correction by the foregoing construction while the state of operation of the internal combustion engine belongs to the mixed EGR region, the decrease in the EGR rate can be canceled out to restrain increase in the amount of NOx production by increasing the low-pressure EGR gas amount provided that the temperature of the low-pressure EGR gas satisfies the low-pressure EGR increase permission condition.

In the foregoing various constructions in accordance with the first aspect of the invention, the determination means may, for example, estimate the temperature of EGR gas (or low-pressure EGR gas or high-pressure EGR gas) by executing a model calculation determined beforehand through experiments or the like, on the basis of parameters that represent the state of operation of the internal combustion engine, that is, parameters (engine rotation speed, engine load, fuel injection amount, water temperature, oil temperature, intake air amount, supercharge pressure, etc.) acquirable via sensors provided for the internal combustion engine, and may perform the above-described determination on the basis of a result of the comparison of the estimated temperature with the reference temperature (or the first reference temperature or the second reference temperature). The model calculation is a calculation system for theoretical calculation of a physical quantity on the basis of a group of parameters detectable via sensors or the like, and is determined beforehand through experiments or the like.

Furthermore, a sensor that detects the temperature of exhaust gas may be provided in an intermediate portion of the EGR passage (or the low-pressure EGR passage or the high-pressure EGR passage) or near the branching site of the EGR passage (or the low-pressure EGR passage or the high-pressure EGR passage) or the like, so as to directly detect the temperature of the EGR gas (or the low-pressure EGR gas or the high-pressure EGR gas), and the foregoing determination may be performed on the basis of a result of comparison of the detected temperature with the reference temperature (or the first reference temperature or the second reference temperature).

In a construction where an intermediate portion of the EGR passage (or the low-pressure EGR passage or the high-pressure EGR passage) is provided with an EGR cooler that cools the EGR gas, the temperature of the EGR gas (or the low-pressure EGR gas or the high-pressure EGR gas) may be estimated from a temperature difference between the inlet and the outlet of the EGR cooler provided for cooling water to flow through the EGR cooler, and the foregoing determination may be performed on the basis of a result of comparison of the estimated temperature with the reference temperature (or the first reference temperature or the second reference temperature).

Still further, the temperature of the exhaust gas that flows out of the exhaust purification device may be estimated on the basis of the temperature of the exhaust purification device, and the low-pressure EGR gas temperature may be estimated from the estimated temperature of the exhaust gas, and the foregoing determination may be performed on the basis of a result of comparison of the estimated low-pressure EGR gas temperature with the reference temperature. The temperature of the exhaust purification device may be directly measured by a sensor that is provided for detecting the temperature of the exhaust purification device, or may also be estimated through a predetermined model calculation.

Furthermore, it is also permissible to estimate which one of temperature regions the temperature of EGR gas (or low-pressure EGR gas or high-pressure EGR gas) belongs to on the basis of the elapsed time following the end of the temperature-raising process. For example, during a predetermined period following the end of the temperature-raising process, it may be estimated that the temperature of EGR gas (or low-pressure EGR gas or high-pressure EGR gas) belongs to a high-temperature region, and after the predetermined period elapses following the end of the temperature-raising process, it may be estimated that the temperature of EGR gas (or low-pressure EGR gas or high-pressure EGR gas) belongs to an ordinary region. The predetermined period may be, for example, set beforehand at an amount of time that is needed for the temperature of EGR gas (or low-pressure EGR gas or high-pressure EGR gas) to decrease to a temperature that occurs at an ordinary time.

In a construction where the high-pressure EGR passage connects the exhaust manifold and the intake manifold of the internal combustion engine, the high-pressure EGR gas temperature may be estimated on the basis of a difference between the intake air temperature in the intake manifold and the intake air temperature in the intake passage, and the foregoing determination may be performed on the basis of a result of comparison of the estimated temperature with the reference temperature.

Furthermore, a sensor that detects the cooling water temperature or the temperature of lubricating oil of the internal combustion engine may be provided, and the high-pressure EGR gas temperature may be estimated on the basis of the cooling water temperature or the lubricating oil temperature detected by the sensor, and the foregoing determination may be performed on the basis of a result of comparison of the estimated temperature with the reference temperature. This is because when the cooling water temperature or the lubricating oil temperature is high, engine members are considered to be in a high-temperature state.

When a high-temperature state of EGR gas (or low-pressure EGR gas or high-pressure EGR gas) continues following the end of the temperature-raising process, the temperature of EGR gas (or low-pressure EGR gas or high-pressure EGR gas) is considered to gradually return to the ordinary-state temperature as time elapses following the end of the temperature-raising process. Therefore, it may also be determined whether or not the temperature of EGR gas (or low-pressure EGR gas or high-pressure EGR gas) is above the reference temperature (or the first reference temperature or the second reference temperature) on the basis of the elapsed time following the time point of the end of the temperature-raising process.

In the first aspect of the invention, the correction means may decrease the amount of decrease of the EGR gas amount as the temperature of the EGR gas in a high-temperature state decreases with the elapse of time. For example, the amount of decrease in the EGR gas amount caused by the correction means may be decreased as the elapsed time following the time point of the end of the temperature-raising process increases.

For the same reasons, in the foregoing construction, the correction means may decrease the amount of decrease in the low-pressure EGR gas amount as the temperature of low-pressure EGR gas in a high-temperature state decreases with the elapse of time. For example, the amount of decrease in the low-pressure EGR gas amount caused by the correction means may be decreased as the elapsed time following the time point of the end of the temperature-raising process increases.

Furthermore, in the foregoing construction, the correction means may decrease the amount of decrease in the high-pressure EGR gas amount as the temperature of high-pressure EGR gas in a high-temperature state decreases with the elapse of time. For example, the amount of decrease in the high-pressure EGR gas amount caused by the correction means may be decreased as the elapsed time following the time point of the end of the temperature-raising process increases.

Furthermore, in the construction where the high-pressure EGR gas amount is increased while the low-pressure EGR gas amount is decreased, the correction means may decrease the amount of increase in the high-pressure EGR gas amount as the temperature of low-pressure EGR gas in a high-temperature state decreases with the elapse of time. For example, the amount of increase in the high-pressure EGR gas amount caused by the correction means may be decreased as the elapsed time following the time point of the end of the temperature-raising process increases.

Furthermore, in the construction where the low-pressure EGR gas amount is increased while the high-pressure EGR gas amount is decreased, the correction means may decrease the amount of increase in the low-pressure EGR gas amount as the temperature of high-pressure EGR gas in a high-temperature state decreases with the elapse of time. For example, the amount of increase in the low-pressure EGR gas amount caused by the correction means may be decreased as the elapsed time following the time point of the end of the temperature-raising process increases.

Therefore, the decreased EGR rate ascribable to the decrease in the EGR gas amount (the low-pressure EGR gas amount or the high-pressure EGR gas amount) can be returned early to the ordinary-state EGR rate.

As a result, it becomes possible to restrain the event in which a fault is caused in the intake system or the EGR system by recirculation of a large amount of high-temperature exhaust gas via the EGR passage (or the low-pressure EGR passage or the high-pressure EGR passage) and also restrain the event in which the amount of NOx production is increased due to decrease in the EGR rate.

A second aspect of the invention is an exhaust purification method of an internal combustion engine, wherein the internal combustion engine including: an EGR passage that connects an exhaust passage of the internal combustion engine and an intake passage of the internal combustion engine; EGR gas amount determination means for determining a basic amount of EGR gas recirculated into the internal combustion engine via the EGR passage in accordance with a state of operation of the internal combustion engine; an exhaust purification device provided in the exhaust passage; and temperature raise means for performing a temperature-raising process of raising a temperature of the exhaust purification device, the exhaust purification method characterized by including: determining whether or not a temperature of EGR gas is above a predetermined reference temperature; and decreasing the amount of EGR gas from the basic amount of EGR gas determined by the EGR gas amount determination means, during a period that it is determined that the temperature of EGR gas is above the reference temperature after the temperature-raising process ends.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a diagram showing an overall construction of an internal combustion engine and an intake/exhaust system in accordance with embodiment of the invention;
FIG 2 is a diagram showing a switching pattern of the low-pressure EGR and the high-pressure EGR in accordance with the state of operation of the internal combustion engine in the embodiment of the invention;
FIG. 3 is a flowchart showing a correction control routine with respect to the EGR gas amount in the embodiment of the invention;
FIG. 4 is a flowchart showing the correction control routine with respect to the EGR gas amount in the embodiment of the invention;
FIG. 5 is a flowchart showing the correction control routine with respect to the EGR gas amount in the embodiment of the invention;
FIG 6 is a flowchart showing the correction control routine with respect to the EGR gas amount in the embodiment of the invention;
FIG. 7 is a flowchart showing the correction control routine with respect to the EGR gas amount in the embodiment of the invention; and
FIGS. 8A and 8B are diagrams showing time-dependent changes in the low-pressure EGR gas temperature and the low-pressure EGR valve opening degree when a reducing correction control with respect to the low-pressure EGR gas amount in the embodiment of the invention is performed.

### DETAILED DESCRIPTION OF EMBODIMENTS

Embodiments of the invention will be illustratively described in detail with reference to the drawings. It is to be noted that the dimensions, materials and shapes of component parts mentioned in conjunction with the embodiments, and the relative arrangements thereof, and the like, unless specifically described, do not limit the technical scope of the invention to themselves.

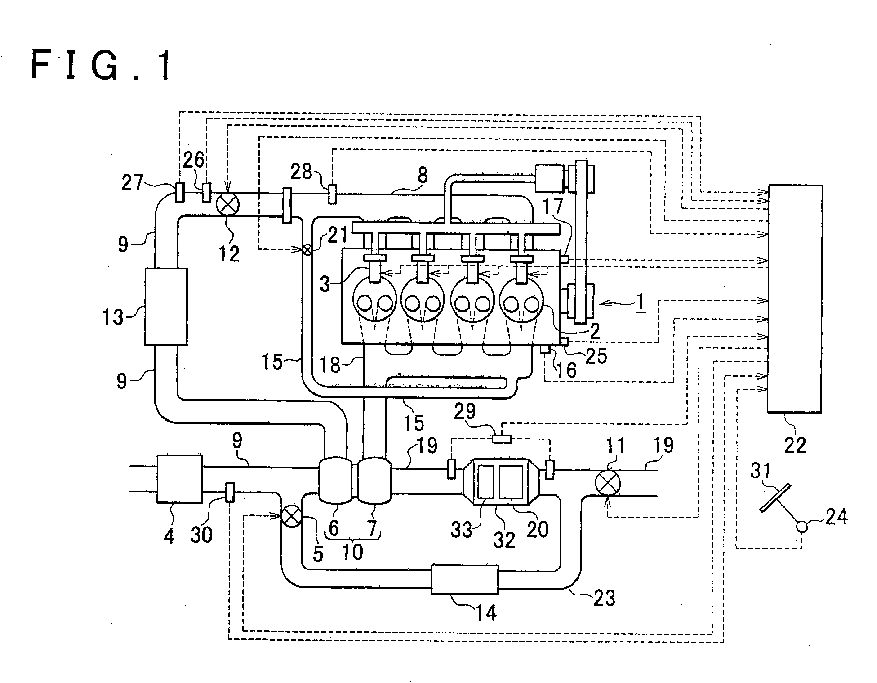

FIG. 1 is a diagram showing an overall construction of an internal combustion engine to which the invention is applied. An internal combustion engine 1 shown in FIG. 1 is a diesel engine that has four cylinders 2. Each cylinder 2 of the internal combustion engine 1 is provided with a fuel injection valve 3 that injects fuel into the combustion chamber of the cylinder 2.

An intake manifold 8 is connected to the internal combustion engine 1, and each one of branch pipes of the intake manifold 8 communicates with the combustion chamber of a corresponding one of the cylinders via an intake port. A throttle valve 12 capable of changing the channel cross-sectional area of an intake passage 9 is provided near a connecting portion between the intake manifold 8 and the intake passage 9. An intercooler 13 that cools gas that flows in the intake passage 9 is provided upstream of the throttle valve 12. A compressor housing 6 of a turbocharger 10 that operates using energy of exhaust gas as a drive source is provided upstream of the intercooler 13. An air cleaner 4 is provided upstream of the compressor housing 6. The throttle valve 12 is connected to an ECU 22 (described later) by electric wiring. The valve opening degree of the throttle valve 12 is controlled on the basis of a control signal from the ECU 22, whereby the amount of flow of gas that flows in the intake passage 9 can be adjusted.

An exhaust manifold 18 is connected to the internal combustion engine 1, and each one of branch pipes of the exhaust manifold 18 is connected to the combustion chamber of a corresponding one of the cylinders 2 via an exhaust port. A turbine housing 7 of the turbocharger 10 is connected to the exhaust manifold 18. An exhaust passage 19 is connected to the turbine housing 7. The exhaust passage 19 is provided with an exhaust purification device 32. The exhaust purification device 32 includes a particulate filter 20 (hereinafter, referred to simply as "filter") that traps PM from exhaust gas, and an oxidation catalyst 33 disposed upstream of the filter 20. An exhaust throttle valve 11 capable of changing the channel cross-sectional area of the exhaust passage 19 is provided downstream of the exhaust purification device 32. Downstream of the exhaust throttle valve 11, the exhaust passage 19 is open to the atmosphere. The exhaust throttle valve 11 is connected to the ECU 22 by electric wiring. The valve opening degree of the exhaust throttle valve 11 is controlled on the basis of a control signal from the ECU 22, whereby the amount of flow of exhaust gas that flows in the exhaust passage 19 can be adjusted.

Incidentally, the exhaust purification device 32 may further include a NOx catalyst. Besides, the oxidation catalyst may be an oxidation catalyst that is firmly supported in the filter 20 beforehand.

A portion of the exhaust passage 19 downstream of the exhaust purification device 32 and upstream of the exhaust throttle valve 11 is connected in communication with a portion of the intake passage 9 upstream of the compressor housing 6 and downstream of the air cleaner 4, by a low-pressure EGR passage 23. The low-pressure EGR passage 23 is provided with a low-pressure EGR cooler 14 that cools exhaust gas that flows in the low-pressure EGR passage 23, and also with a low-pressure EGR valve 5 capable of changing the channel cross-sectional area of the low-pressure EGR passage 23. The low-pressure EGR valve 5 is connected to the ECU 22 by electric wiring. The valve opening degree of the low-pressure EGR valve 5 is controlled on the basis of a control signal from the ECU 22, whereby the amount of exhaust gas that flows through the low-pressure EGR passage 23 (hereinafter, referred to as "low-pressure EGR gas amount") can be adjusted.

Incidentally, the adjustment of the low-pressure EGR gas amount can be performed not only by the above-described method based on the adjustment of the opening degree of the low-pressure EGR valve 5, but may also be performed, for example, through the adjustment of the opening degree of the exhaust throttle valve 11. Concretely, when the opening degree of the exhaust throttle valve 11 is set toward a closed side, the pressure of exhaust gas near the connecting portion between the low-pressure EGR passage 23 and the exhaust passage 19 increases, so that the differential pressure between an upstream side and a downstream side in the low-pressure EGR passage 23 and therefore the low-pressure EGR gas amount increases.

It is also possible to provide an intake throttle valve in the intake passage 9 upstream of the connecting portion between the low-pressure EGR passage 23 and the intake passage 9. Then, the low-pressure EGR gas amount can also be adjusted by adjusting the opening degree of the intake throttle valve. Concretely, when the intake throttle valve is set toward a closed side, the pressure of intake air near the connecting portion between the low-pressure EGR passage 23 and the intake passage 9 decreases, so that the differential pressure between the upstream side and the downstream side in the low-pressure EGR passage 23 becomes great and therefore the low-pressure EGR gas amount increases. Since the temperature of the intake air that passes through the intake throttle valve is low, the intake throttle valve can be adjusted through electronic control, so that the low-pressure EGR gas amount can be controlled with higher precision.

The exhaust manifold 18 and the intake manifold 8 are connected in communication by a high-pressure EGR passage 15. The high-pressure EGR passage 15 is provided with a high-pressure EGR valve 21 that is capable of changing the channel cross-sectional area of the high-pressure EGR passage 15. The high-pressure EGR valve 21 is connected to the ECU 22 by electric wiring. The valve opening degree of the high-pressure EGR valve 21 is controlled on the basis of a control signal from the ECU 22, whereby the amount of exhaust gas that flows through the high-pressure EGR passage 15 (hereinafter, referred to as "high-pressure EGR gas amount") can be adjusted.

Incidentally, the adjustment of the high-pressure EGR gas amount can be performed not only by the above-described method based on the adjustment of the opening degree of the high-pressure EGR valve 21, but may also be performed, for example, through the adjustment of the opening degree of the throttle valve 12. Concretely, when the opening degree of the throttle valve 12 is toward a closed side, the pressure of intake air in the intake manifold 8 decreases, so that the differential pressure between an upstream side and a downstream side in the high-pressure EGR passage 15 becomes great and therefore the high-pressure EGR gas amount increases.

Furthermore, in the case where the turbine of the turbocharger 10 is provided with a nozzle vane that brings about a variable flow amount characteristic of the turbine, the high-pressure EGR gas amount can also be adjusted by adjusting the opening degree of the nozzle vane. Concretely, when the nozzle vane is set toward a closed side, the pressure of exhaust gas in the exhaust manifold 18 increases, so that the differential pressure between an upstream side and a downstream side in the high-pressure EGR passage 15 becomes great and therefore the high-pressure EGR gas amount increases.

An accelerator pedal 31 disposed on the driver's seat side is provided with an accelerator operation amount sensor 24 that detects the accelerator operation amount as the load of the internal combustion engine 1. The internal combustion engine 1 is provided with a crank position sensor 25 that detects the rotation of the crankshaft as the rotation speed of the internal combustion engine 1. The internal combustion engine 1 is also provided with a water temperature sensor 17 that detects the temperature of cooling water and an oil temperature sensor 16 that detects the temperature of lubricating oil. The intake passage 9 is provided with an intake air temperature sensor 26 that detects the temperature of intake gas, a supercharge pressure sensor 27 that detects the supercharge pressure generated by the turbocharger 10, and an air flow meter 30 that detects the amount of intake air. The exhaust passage 19 is provided with a differential pressure sensor 29 that detects the difference in exhaust gas pressure between the upstream side and the downstream side of the exhaust purification device 32. The intake manifold 8 is provided with an intake manifold temperature sensor 28 that detects the temperature of intake gas in the intake manifold 8.

These sensors are connected to the ECU 22 by electric wiring so that detection signals output by the sensors are input to the ECU 22.

The internal combustion engine 1 is equipped with the ECU 22 that is an electronic control computer that controls the internal combustion engine 1. The ECU 22 includes a ROM, a RAM, a CPU, an input port, an output port, etc. although not shown in the drawings. In accordance with the state of operation of the internal combustion engine 1 or a request input by a driver which is detected by one or more of the various sensors, the ECU 22 performs known controls, such as a fuel injection control and the like, and determines the valve opening degrees of the high-pressure EGR valve 21, the low-pressure EGR valve 5, the throttle valve 12 and the exhaust throttle valve 11.

When the low-pressure EGR valve 5 is opened, the low-pressure EGR passage 23 becomes a conducting state, so that a portion of the exhaust gas flowing out of the exhaust purification device 32 flows into the intake passage 9 via the low-pressure EGR passage 23. After flowing into the intake passage 9, the low-pressure EGR gas recirculates into the combustion chambers of the internal combustion engine 1 by way of the compressor housing 6 and the intake manifold 8.

When the high-pressure EGR valve 21 is opened, the high-pressure EGR passage 15 becomes a conducting state, so that a portion of the exhaust gas flowing in the exhaust manifold 18 flows into the intake manifold 8 via the high-pressure EGR passage 15, and then recirculates into the combustion chambers of the internal combustion engine 1.

By recirculating a portion of the exhaust gas into the combustion chambers of the internal combustion engine 1 via the low-pressure EGR passage 23 and/or the high-pressure EGR passage 15, the combustion temperature in the combustion chambers decreases, and the amount of NOx produced in the combustion process decreases.

With regard to the recirculation of exhaust gas via each of the low-pressure EGR passage 23 and the high-pressure EGR passage 15, the state of operation of the internal combustion engine in which the recirculation of exhaust gas can be suitably performed is found beforehand through experiments or the like. Therefore, in this embodiment, in accordance with the state of operation of the internal combustion engine, the recirculation of exhaust gas is performed by switching between the low-pressure EGR passage 23 and the high-pressure EGR passage 15 or using them in combination.

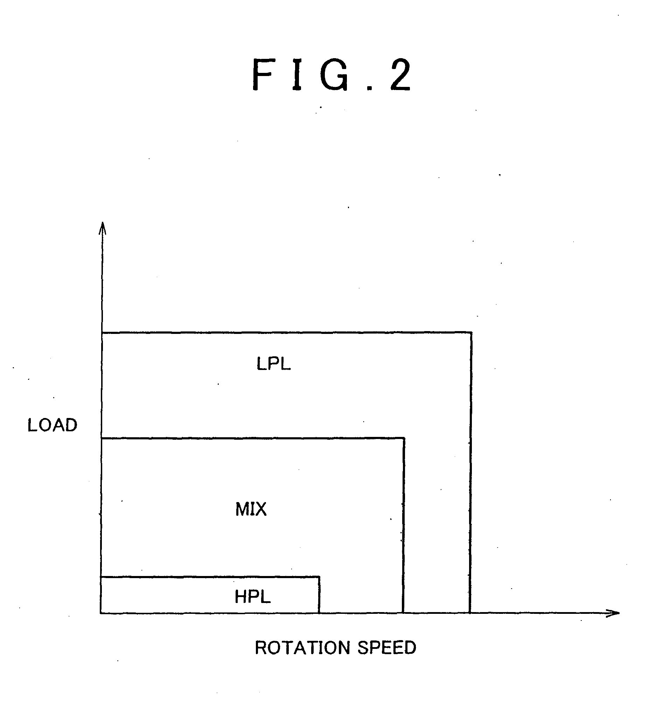

FIG. 2 is a diagram showing the switching pattern of the EGR control performed by using the low-pressure EGR passage 23 and the EGR control performed by using the high-pressure EGR passage 15 which is determined depending on the state of operation of the internal combustion engine 1. In FIG 2, the horizontal axis represents the engine rotation speed of the internal combustion engine 1, and the vertical axis represents the engine load of the internal combustion engine 1.

The HPL region shown in FIG. 2 is a region of a low-load/low-rotation speed operation state of the internal combustion engine 1. In the HPL region, EGR control is performed by using the high-pressure EGR passage 15. The MIX region in FIG. 2 is a region of an intermediate-low/intermediate-rotation speed operation state of the internal combustion engine 1. In the MIX region, EGR control is performed by using the high-pressure EGR passage 15 and the low-pressure EGR passage 23 in combination. The LPL region in FIG. 2 is a region of a high-load/high-rotation speed operation state of the internal combustion engine 1. In the LPL region, EGR control is performed by using the low-pressure EGR passage 23. In a region that is higher in rotation speed or higher in load than the LPL region, EGR control is not performed.

By performing EGR control by switching between the high-pressure EGR passage 15 and the low-pressure EGR passage 23 or using the two passages in combination, it becomes possible to perform EGR control in a wide region of operation.

In the switching pattern of the low-pressure EGR passage 23 and the high-pressure EGR passage 15, a basic amount of the low-pressure EGR gas amount (hereinafter, referred to as "basic low-pressure EGR gas amount") and a basic amount of the high-pressure EGR gas amount (hereinafter, referred to as "basic high-pressure EGR gas amount") according to the state of operation of the internal combustion engine are determined. In this embodiment, furthermore, the basic low-pressure EGR gas amount and/or the basic high-pressure EGR gas amount is corrected in accordance with the state of the exhaust purification system. A correction control of the low-pressure EGR gas amount and the high-pressure EGR gas amount according to the state of the exhaust purification device 32 will be described hereinafter.

Firstly, the exhaust purification device 32 will be described.

While the filter 20 is being used, the PM trapped from exhaust gas accumulates on the filter 20. If a large amount of PM deposits on the filter 20, the pressure loss in the filter 20 increases, which sometimes leads to output decrease of the internal combustion engine 1 or deterioration of the fuel consumption rate. Therefore, when the amount of deposit of PM on the filter 20 becomes equal to or greater than a predetermined amount of deposit, a filter regeneration process of removing by oxidation the PM deposited on the filter 20 is suitably performed.

The predetermined amount of deposit is an amount of PM deposit that gives increase to a possibility of output decrease of the internal combustion engine 1 or deterioration of the fuel consumption rate, and is found beforehand through experiments or the like.

The filter regeneration process is, concretely, a temperature-raising process of raising the temperature of the filter 20. As the temperature of the filter 20 increases due to the temperature-raising process, the PM deposited on the filter 20 is heated, so that the oxidation reaction of the PM is accelerated.

Examples of the temperature-raising process for the filter 20 include a method in which subsidiary fuel injection is performed separately from the main fuel injection for generating torque. In the case where this method is employed, the temperature of the exhaust gas discharged from the internal combustion engine increases, and the unburnt fuel contained in the exhaust gas, as a reducing agent, undergoes oxidation-reduction reactions on the oxidation catalyst 33. Due to reaction heat generated by the oxidation-reduction reactions, the temperature of the exhaust gas that flows into the filter 20 disposed downstream of the oxidation catalyst 33 increases.

Thus, through the filter regeneration process in which the PM deposited on the filter 20 is suitably removed by oxidation, it is possible to restrain the increase of the pressure loss caused by a large amount of PM deposited on the filter 20.

However, the carrying out of the above-described filter regeneration process can sometimes result in excessively high temperature of the high-pressure EGR gas or the low-pressure EGR gas.

For example, when the subsidiary fuel injection is performed as a temperature-raising process for the filter 20, the temperature of the combustion chambers of the internal combustion engine becomes higher than when only the main fuel injection is performed as an ordinary operation. Therefore, the temperature of engine members around the combustion chambers, such as the engine head and the like, becomes high. In turn, the temperature of the high-pressure EGR passage 15 provided adjacent to the engine head becomes high, so that the high-pressure EGR gas may possibly become high.

Furthermore, during the carrying out of the filter regeneration process, the reaction heat from the oxidation reaction of the PM deposited on the filter 20 makes the temperature of the filter 20 very high. Therefore, the exhaust gas that passes through the filter 20 is heated, so that high-temperature exhaust gas flows out of the filter 20. As a result, the temperature of the low-pressure EGR gas becomes high.

As the high-pressure EGR gas becomes high, the temperature of the gas taken into the combustion chambers becomes high, so that there is a risk of increasing the amount of smoke or NOx produced in the combustion process. Besides, if a large amount of high-pressure EGR gas at high temperature passes through the high-pressure EGR valve 21, there is a risk of a fault or the like occurring in the operation of the high-pressure EGR valve 21.

If the temperature of low-pressure EGR gas becomes high, the temperature of intake gas that flows into the compressor housing 6 becomes high, so that there is a risk of a failure or the like occurring in the operation of the turbocharger 10. Besides, if a large amount of low-pressure EGR gas at high temperature passes through the low-pressure EGR valve 5 or the low-pressure EGR cooler 14, there is a risk of a fault or the like occurring in the operation of the low-pressure EGR valve 5 or the low-pressure EGR cooler 14.

It is conceivable to restrain the occurrence of a fault or the like as described above which is caused by recirculation of high-temperature exhaust gas in large amount by reducing the low-pressure EGR gas amount or the high-pressure EGR gas amount (hereinafter, referred to as "EGR gas amount") during the carrying out of the filter regeneration process.

According to the conceived countermeasure, a reducing correction with respect to the EGR gas amount is performed only during the carrying out of the filter regeneration process, and the reducing correction with respect to the EGR gas amount is released at the time point of the end of the filter regeneration process. Specifically, at the time point when the filter regeneration process ends, the EGR gas amount is returned to the EGR gas amount that occurs at an ordinary time. The ordinary time represents a time prior to execution of the filter regeneration process is executed or a time when a sufficient time has elapsed following the execution thereof and the filter regeneration process is not being executed.

However, the exhaust purification device 32, the combustion chambers, and the engine members and the like therearound, such as the engine head and the like, tend to retain a high-temperature state for a while after the filter regeneration process ends. Therefore, the high temperature state of the low-pressure EGR gas or the high-pressure EGR gas caused by the carrying out of the filter regeneration process can also possibly continue for a while after the filter regeneration process ends.

Therefore, if the reducing correction with respect to the EGR gas amount is descontinued at the time point of the end of the filter regeneration process, there is a risk of recirculation of a large amount of high-temperature exhaust gas via the low-pressure EGR passage 23 or the high-pressure EGR passage 15.

In this embodiment, the reducing correction with respect to the EGR gas amount is carried out for a period following the end of the filter regeneration process during which there is a possibility of the temperature of EGR gas being above a predetermined reference temperature. Concretely, it is determined whether or not the EGR gas temperature is above the predetermined reference temperature. If it is determined that the EGR gas temperature is above the predetermined reference temperature, a correction of reducing the EGR gas amount is performed.

Incidentally, the reference temperature is an upper-limit value of the EGR gas temperature that poses no risk of causing a fault as mentioned above, and is found beforehand through experiments or the like.

The method of estimating the temperature of low-pressure EGR gas or the method of determining whether or not the temperature of low-pressure EGR gas is above a predetermined first reference temperature may be as follows. For example, in the case of low-pressure EGR gas, the low-pressure EGR gas temperature may be estimated by executing a model calculation on the basis of parameters acquirable via sensors or the like provided for the internal combustion engine 1, such as the engine rotation speed detected by the crank position sensor 25, the engine load detected by the accelerator operation amount sensor 24, the amount of fuel injection estimated from a control command value output to the fuel injection valve 3 by the ECU 22, the cooling water temperature detected by the water temperature sensor 17, the lubricating oil temperature detected by the oil temperature sensor 16, the temperature of intake gas detected by the intake air temperature sensor 26, the supercharge pressure detected by the supercharge pressure sensor 27, the intake air amount detected by the air flow meter 30, etc.

The model calculation is a system of theoretical calculation of a physical quantity on the basis of a group of parameters detectable by sensors as mentioned above, and is found beforehand through experiments or the like, and is stored in the ROM of the ECU 22. The aforementioned first reference temperature is an upper-limit value of the low-pressure EGR gas temperature that poses no risk of causing a fault in the intake system or the EGR system, and is found beforehand through experiments or the like.

Furthermore, the low-pressure EGR gas temperature may also be estimated from a difference in the temperature of the cooling water flowing through the low-pressure EGR cooler 14 between the inlet and the outlet of the low-pressure EGR cooler 14.

Still further, the low-pressure EGR gas temperature may also be estimated on the basis of the estimated temperature of the exhaust gas that flows out of the filter 20 which is estimated from the temperature of the filter 20. The temperature of the filter 20 may be directly measured by a sensor that is provided on the filter 20 for detecting the temperature of the filter 20, or may also be estimated by the model calculation.

It is also permissible to estimate what temperature range the temperature of low-pressure EGR gas belongs to on the basis of the elapsed time following the end of the filter regeneration process. For example, it may be determined that the temperature of low-pressure EGR gas belongs to a high-temperature region as long as a predetermined period has not elapsed following the end of the filter regeneration process, and it may be determined that the temperature of low-pressure EGR gas belongs to an ordinary region after the predetermined period has elapsed following the end of the temperature-raising process.

The aforementioned high-temperature region is a region of the low-pressure EGR gas temperature that poses a risk of causing a fault as mentioned above. The ordinary region is a region of the EGR gas temperature that occurs prior to the execution of the temperature-raising process or when a sufficient time has elapsed following the execution and the temperature-raising process is not being carried out. In this case, the first reference temperature is a boundary temperature region between the high-temperature region and the ordinary region. The aforementioned predetermined period may be set to be an amount of time that is needed for the low-pressure EGR gas temperature to decrease to the temperature occurring at the ordinary time after the filter regeneration process ends.

On the other hand, an example of the method of estimating the temperature of high-pressure EGR gas or the method of determining whether or not the temperature of high-pressure EGR gas is above a predetermined second reference temperature is a method in which the high-pressure EGR gas temperature is estimated by the model calculation. The second reference temperature is an upper-limit value of the high-pressure EGR gas temperature that poses no risk of causing a fault in the intake system or the EGR system, and is found beforehand through experiments or the like.

The high-pressure EGR gas temperature may also be estimated on the basis of a difference between the intake gas temperature in the intake manifold 8 that is detected by the intake manifold temperature sensor 28 and the intake gas temperature detected by the intake air temperature sensor 26 in the intake manifold 8.

The high-pressure EGR gas temperature may also be directly detected by a high-pressure EGR temperature sensor that is provided in an intermediate portion of the high-pressure EGR passage 15 for detecting the temperature of the exhaust gas that flows in the high-pressure EGR passage 15.

Furthermore, the high-pressure EGR gas temperature may also be estimated on the basis of the cooling water temperature detected by the water temperature sensor 17 or the lubricating oil temperature detected by the oil temperature sensor 16. This is because if the cooling water temperature or the lubricating oil temperature is high, it can be estimated that the engine members around the combustion chambers are in a high-temperature state.

Still further, it may be estimated what temperature range the temperature of high-pressure EGR gas belongs to on the basis of the elapsed time following the end of the filter regeneration process. For example, it may be determined that the temperature of high-pressure EGR gas belongs to a high-temperature region as long as a predetermined period has not elapsed following the end of the filter regeneration process, and it may be determined that the temperature of high-pressure EGR gas belongs to an ordinary region after the predetermined period has elapsed following the end of the temperature-raising process.

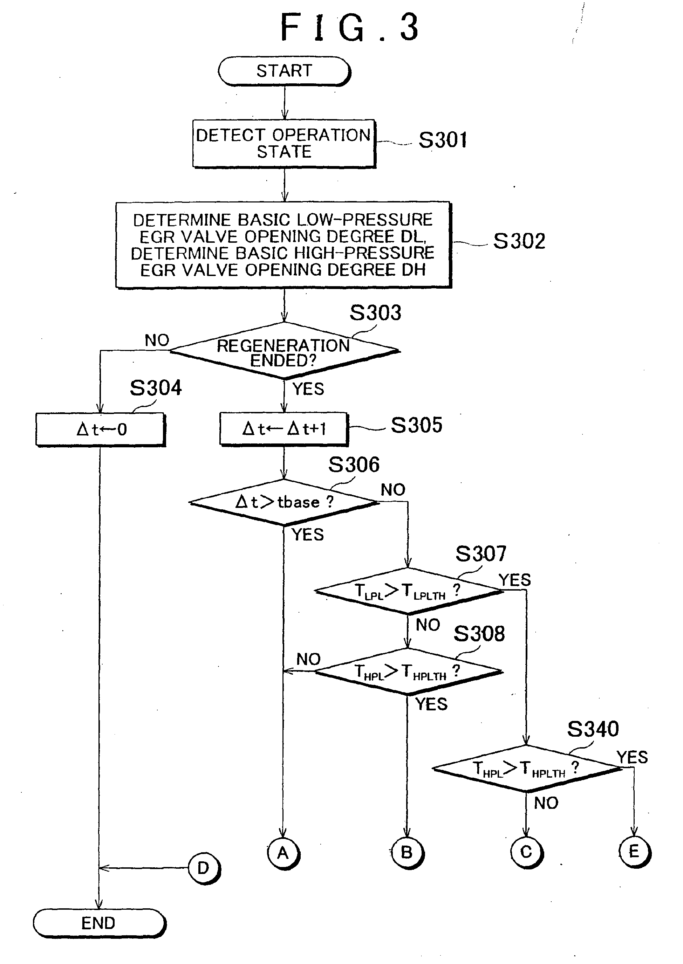

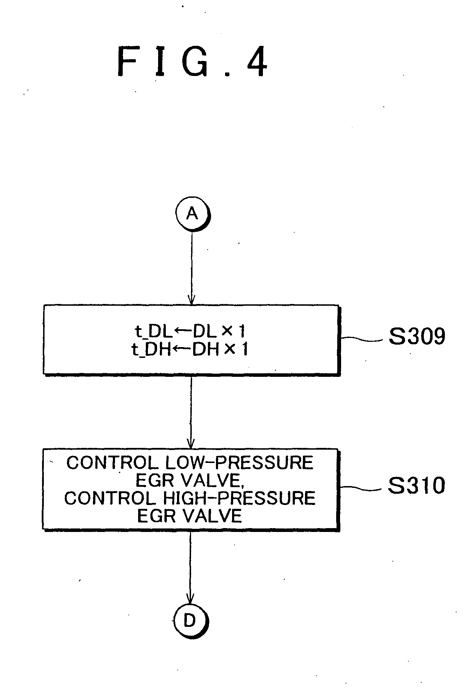

A reducing correction control with respect to the EGR gas amount following the end of the filter regeneration process which is performed by the ECU 22 in this embodiment will be described with reference to the flowchart shown in FIGS. 3 to 7. The flowchart of FIGS. 3 to 7 shows a routine for performing the reducing correction control with respect to the EGR gas amount. This routine is executed by the ECU 22 repeatedly in every predetermined period.

Firstly, in step S301, the ECU 22 detects the state of operation of the internal combustion engine 1. Concretely, the ECU 22 detects the engine load of the internal combustion engine 1 from a detection value provided by the accelerator operation amount sensor 24, and detects the engine rotation speed of the internal combustion engine 1 from a detection value provided by the crank position sensor 25.

In step S302, the ECU 22 determines a basic low-pressure EGR gas amount on the basis of the state of operation of the internal combustion engine 1 detected in step S301, and determines the opening degree DL of the low-pressure EGR valve 5 that corresponds to the basic low-pressure EGR gas amount (hereinafter, referred to as "basic low-pressure EGR valve opening degree DL"). Besides, the ECU 22 determines the basic high-pressure EGR gas amount on the basis of the state of operation of the internal combustion engine 1 detected in step S301, and determines the opening degree DH of the high-pressure EGR valve 21 that corresponds to the basic high-pressure EGR gas amount (hereinafter, referred to as "basic high-pressure EGR valve opening degree DH").

In step S303, the ECU 22 determines whether or not the filter regeneration process with respect to the filter 20 has ended.

If a negative determination is made in step S303, that is, if it is determined that the filter regeneration process has not ended, the ECU 22 proceeds to step S304. In step S304, the ECU 22 resets a post-regeneration counter Δt. The post-regeneration counter Δt represents the elapsed time following the end of the filter regeneration process. After executing step S304, the ECU ends the present execution of the routine.

On the other hand, if an affirmative determination is made in step S303, that is, if it is determined that the filter regeneration process has ended, the ECU 22 proceeds to step S305. In step S305, the ECU 22 increases the post-regeneration counter Δt by a unit amount.

Subsequently in step S306, the ECU 22 determines whether or not a predetermined time tbase has elapsed following the end of the filter regeneration process. Incidentally, the predetermined time tbase is an elapsed time following the end of the filter regeneration process which allows determination that the temperature of the exhaust gas discharged from the exhaust purification device 32 and the temperature of the engine members around the head of the internal combustion engine 1 have decreased to a temperature occurring at the ordinary time (a time point prior to execution of the filter regeneration process), and the predetermined time *tbase* is found beforehand through.

In an affirmative determination is made in step S306 (Δt*>tbase*), the ECU 22 determines that a sufficient amount of time has elapsed following the end of the filter regeneration process and therefore the temperatures of the exhaust purification device 32 and the engine members of the internal combustion engine 1 have returned to the temperatures occurring at the ordinary time. Then, the ECU 22 proceeds to step S309.

In step S309, the ECU 22 sets the opening degree control command value t_DL for the low-pressure EGR valve 5 at the basic low-pressure EGR valve opening degree DL found in step S302, and sets the opening degree control command value t_DH for the high-pressure EGR valve 21 at the basic high-pressure EGR valve opening degree DH found in step S302.

Subsequently in step S310, the ECU 22 controls the low-pressure EGR valve 5 by the low-pressure EGR valve opening degree control command value t_DL determined in step S309, and controls the high-pressure EGR valve 21 by the high-pressure EGR valve opening degree control command value t_DH determined in step S309.

After executing step S310, the ECU ends the present execution of the routine.

On the other hand, if a negative determination is made in step S306 (Δt≤*tbase*), the ECU 22 determines that a sufficient amount of time has not elapsed following the end of the filter regeneration process and the exhaust purification device 32 and the engine members of the internal combustion engine 1 are still in the high-temperature state, and proceeds to step S307.

In step S307, the ECU 22 determines whether or not the temperature T_{LPL} of the low-pressure EGR gas is above the first reference temperature T_{LPLTH}. If an affirmative determination is made in step S307 (T_{LPL}>T_{LPLTH}), the ECU 22 proceeds to step S340.

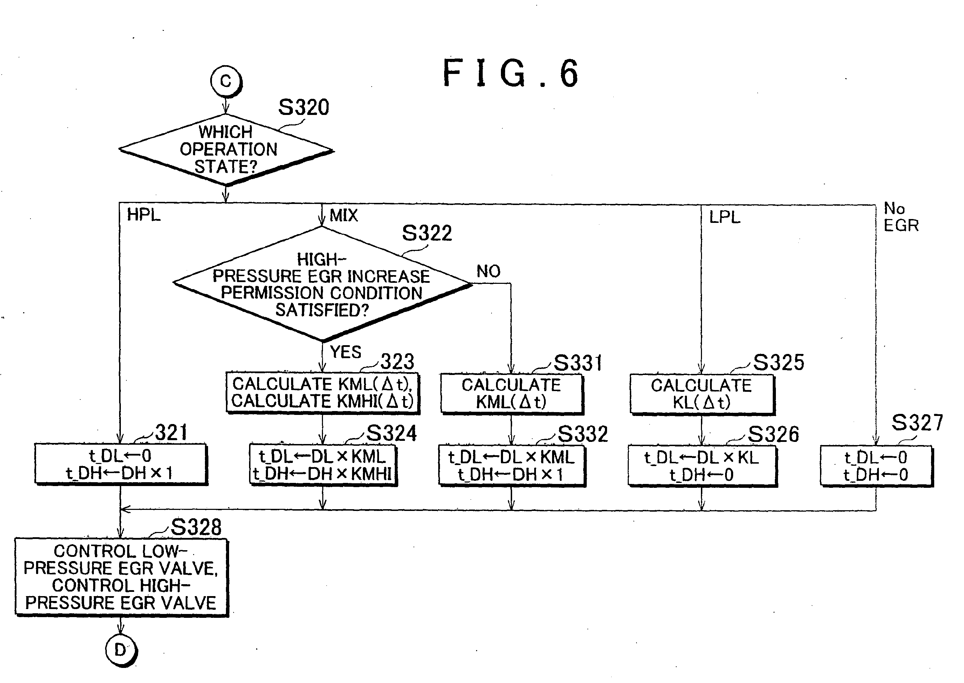

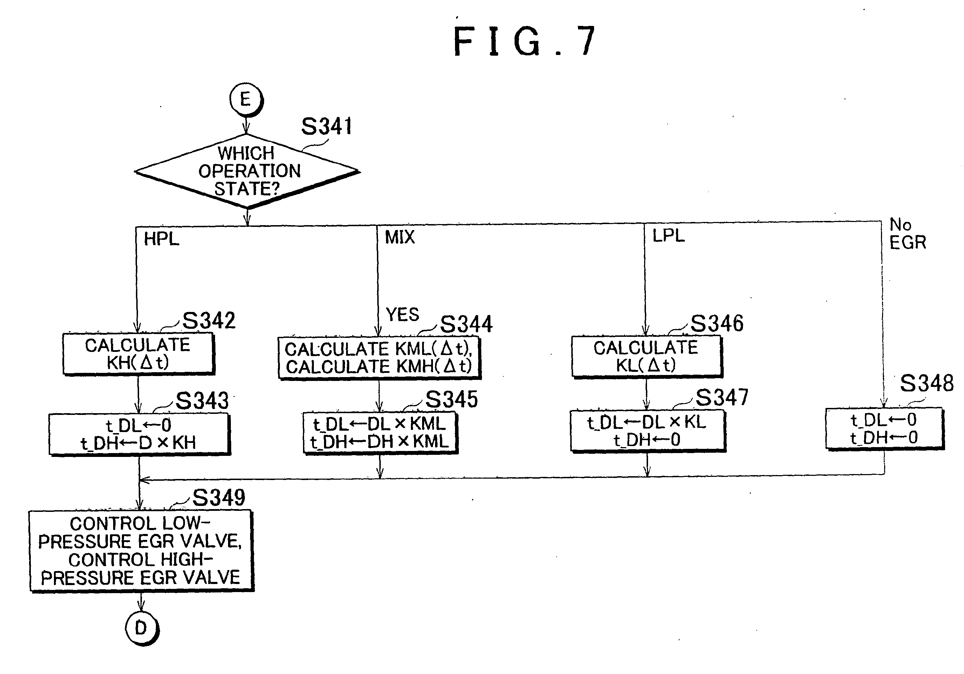

In step S340, the ECU 22 determines whether or not the temperature T_{HPL} of the high-pressure EGR gas is above the second reference temperature T_{HPLTH}. If an affirmative determination is made in step S340 (T_{HPL}> T_{HPLTH}), the ECU 22 proceeds to step S341 in FIG. 7, in which the ECU 22 performs an EGR gas amount correction control prepared for the case where the temperatures of the low-pressure EGR gas and the high-pressure EGR gas are high. On the other hand, if a negative determination is made in step S340 (T_{HPL}≤T_{HPLTH}), the ECU 22 proceeds to step S320 in FIG. 6, in which the ECU 22 performs an EGR gas amount correction control prepared for the case where the temperature of the low-pressure EGR gas is high. If a negative determination is made in step S307 (T_{LPL}≤T_{LPLTH}), the ECU 22 proceeds to step S308.

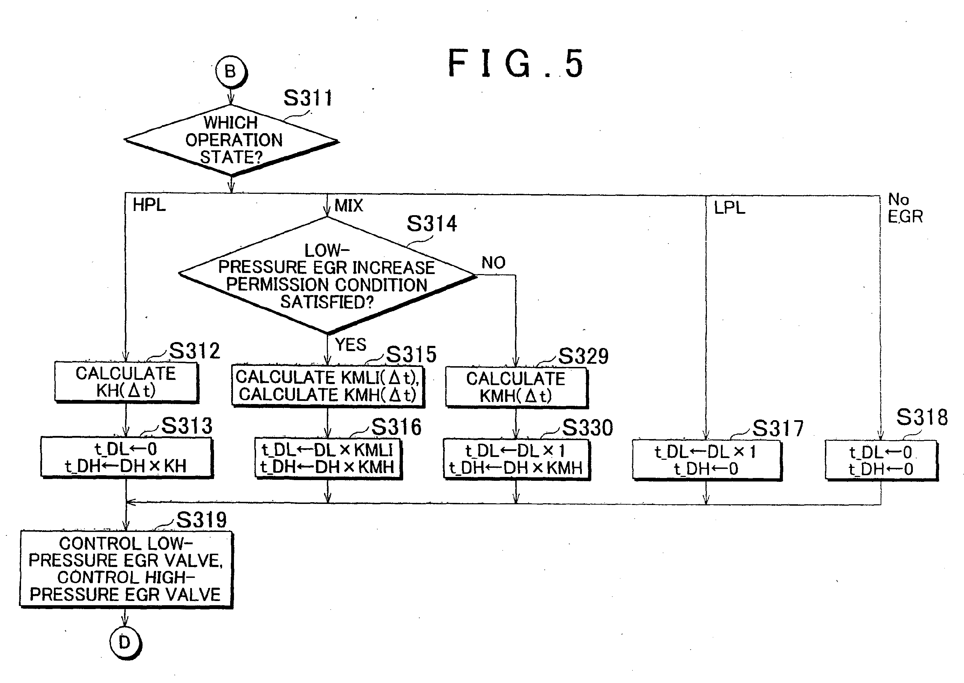

In step S308, the ECU 22 determines whether or not the temperature T_{HPL} of the high-pressure EGR gas is above the second reference temperature T_{HPLTH}. If an affirmative determination is made in step S308 (T_{HPL}>T_{HPLTH}), the ECU 22 proceeds to step S311 in FIG. 5, in which the ECU 22 performs an EGR gas amount correction control prepared for the case where the temperature of high-pressure EGR gas is high. On the other hand, if a negative determination is made in step S308 (T_{HPL}≤T_{HPLTH}), the ECU 22 proceeds to step S309.

FIG. 5 is a flowchart representing the EGR gas amount correction control routine that is performed in the case where it is determined that the temperature of the high-pressure EGR gas is high.

Firstly in step S311, the ECU 22 determines which one of the operation regions shown in FIG. 2 the state of operation of the internal combustion engine 1 belongs to on the basis of the state of operation of the internal combustion engine 1 detected in step S301.

If in step S311 it is determined that the state of operation of the internal combustion engine 1 belongs to the HPL region in FIG. 2, the ECU 22 proceeds to step S312.

In step S312, the ECU 22 finds a high-pressure EGR reducing correction coefficient KH that determines a reducing correction amount for the high-pressure EGR gas amount which is in accordance with the elapsed time following the end of the filter regeneration process. Concretely, from a map that determines a high-pressure EGR reducing correction coefficient KH in accordance with the post-regeneration counter Δt, the ECU 22 finds the high-pressure EGR reducing correction coefficient KH corresponding to the post-regeneration counter Δt found in step S305. This map is found beforehand through experiments or the like, and is stored in the ROM in the ECU 22.

The high-pressure EGR reducing correction coefficient KH is a numerical value that is smaller than 1, and may be a constant, or may also be a value that is found by an increasing function related to the elapsed time following the end of the filter regeneration process.

Subsequently in step S313, the ECU 22 sets the opening degree control command value t_DL for the low-pressure EGR valve 5 at 0, and sets the opening degree control command value t_DH for the high-pressure EGR valve 21 at the multiplication product of the basic high-pressure EGR valve opening degree DH and the high-pressure EGR reducing correction coefficient KH found in step S312. That is, the ECU 22 sets the opening degree control command value t_DH as in t_DH=DHxKH.

Subsequently, the ECU 22 proceeds to step S319, in which the ECU 22 controls the low-pressure EGR valve 5 by the low-pressure EGR valve opening degree control command value t_DL determined in step S313, and controls the high-pressure EGR valve 21 by the high-pressure EGR valve opening degree control command value t_DH determined in step S313.

After executing step S319, the ECU ends the present execution of the routine.

If in step S311 it is determined that the state of operation of the internal combustion engine 1 belongs to the MIX region in FIG. 2, the ECU 22 proceeds to step S314.

In step S314, the ECU 22 determines whether or not the temperature of low-pressure EGR gas satisfies a low-pressure EGR increase permission condition. The low-pressure EGR increase permission condition is a condition of the low-pressure EGR gas temperature at which the NOx production amount can be reduced by increasing the low-pressure EGR gas amount, and is found beforehand through experiments or the like.

If an affirmative determination is made in step S314, the ECU 22 proceeds to step S315. On the other hand, if a negative determination is made in step S314, the ECU 22 proceeds to step S329 described below.

In step S315, the ECU 22 finds a high-pressure EGR reducing correction coefficient KMH that determines a reducing correction amount for the high-pressure EGR gas amount which is in accordance with the elapsed time following the end of the filter regeneration process, and finds a low-pressure EGR increasing correction coefficient KMLI that determines an increasing correction amount for the low-pressure EGR gas amount which is in accordance with the elapsed time following the end of the filter regeneration process.

Concretely, from a map that determines the high-pressure EGR reducing correction coefficient KMH in accordance with the post-regeneration counter Δt, the ECU 22 finds the high-pressure EGR reducing correction coefficient KMH that corresponds to the post-regeneration counter Δt found in step S305. Besides, from a map that determines the low-pressure EGR increasing correction coefficient KMLI in accordance with the post-regeneration counter Δt, the ECU 22 finds the low-pressure EGR increasing correction coefficient KMLI that corresponds to the post-regeneration counter Δt found in step S305. These maps are found beforehand through experiments or the like, and are stored in the ROM in the ECU 22.

The high-pressure EGR reducing correction coefficient KMH is a numerical value that is smaller than 1, and may be a constant, or may also be a value that is found by an increasing function related to the elapsed time following the end of the filter regeneration process. Besides, the low-pressure EGR increasing correction coefficient KMLI is a numerical value that is larger than 1, and may be a constant, or may also be a value that is found by a decreasing function related to the elapsed time following the end of the filter regeneration process.

Subsequently in step S316, the ECU 22 sets the opening degree control command value t_DL for the low-pressure EGR valve 5 at the multiplication product of the basic low-pressure EGR valve opening degree DL and the low-pressure EGR increasing correction coefficient KMLI found in step S315. That is, the ECU 22 sets the opening degree control command value t_DL as in t_DL=DL×KMLI.

Besides, the ECU 22 sets the opening degree control command value t_DH for the high-pressure EGR valve 21 at the multiplication product of the basic high-pressure EGR valve opening degree DH and the high-pressure EGR reducing correction coefficient KMH found in step S315. That is, the ECU 22 sets the opening degree control command value t_DH as in t_DH=DHxKMH.

Subsequently, the ECU 22 proceeds to step S319, in which the ECU 22 controls the low-pressure EGR valve 5 by the low-pressure EGR valve opening degree control command value t_DL determined in step S316, and controls the high-pressure EGR valve 21 by the high-pressure EGR valve opening degree control command value t_DH determined in step S316.

After executing step S319, the ECU ends the present execution of the routine.

If a negative determination is made in step S314, the ECU 22 proceeds to step S329.

In step S329, the ECU 22 finds a high-pressure EGR reducing correction coefficient KMH that determines a reducing correction amount of the high-pressure EGR gas amount which is in accordance with the elapsed time following the end of the filter regeneration process.

Concretely, from a map that determines the high-pressure EGR reducing correction coefficient KMH in accordance with the post-regeneration counter Δt, the ECU 22 finds a high-pressure EGR reducing correction coefficient KMH that corresponds to the post-regeneration counter Δt found in step S305. This map is found beforehand through experiments or the like, and is stored in the ROM in ECU 22.

The high-pressure EGR reducing correction coefficient KMH is a numerical value that is smaller than 1, and may be a constant, or may also be a value that is found by an increasing function related to the elapsed time following the end of the filter regeneration process.

Subsequently in step S330, the ECU 22 sets the opening degree control command value t_DL for the low-pressure EGR valve 5 at the basic low-pressure EGR valve opening degree DL, and sets the opening degree control command value t_DH for the high-pressure EGR valve 21 at the multiplication product of the basic high-pressure EGR valve opening degree DH and the high-pressure EGR reducing correction coefficient KMH found in step S329. That is, the ECU 22 sets the opening degree control command value t_DH as in t_DH=DH×KMH.

Subsequently, the ECU 22 proceeds to step S319, in which the ECU 22 controls low-pressure EGR valve 5 by the low-pressure EGR valve opening degree control command value t_DL determined in step S330, and also controls the high-pressure EGR valve 21 by the high-pressure EGR valve opening degree control command value t_DH determined in step S330.

After executing step S319, the ECU ends the present execution of the routine.

If in step S311 it is determined that the state of operation of the internal combustion engine 1 belongs to the LPL region shown in FIG. 2, the ECU 22 proceeds to step S317.

In step S317, the ECU 22 sets the opening degree control command value t_DL for the low-pressure EGR valve 5 at the basic low-pressure EGR valve opening degree DL, and sets the opening degree control command value t_DH for the high-pressure EGR valve 21 at 0.

Subsequently, the ECU 22 proceeds to step S319, in which the ECU 22 controls the low-pressure EGR valve 5 by the low-pressure EGR valve opening degree control command value t_DL determined in step S317, and also controls the high-pressure EGR valve 21 by the high-pressure EGR valve opening degree control command value t_DH determined in step S317.

After executing step S319, the ECU ends the present execution of the routine.

If in step S311 it is determined that the state of operation of the internal combustion engine 1 belongs to the region shown in FIG. 2 in which the EGR is not performed, the ECU 22 proceeds to step S318.

In step S318, the ECU 22 sets the opening degree control command value t_DL for the low-pressure EGR valve 5 at 0, and sets the opening degree control command value t_DH for the high-pressure EGR valve 21 at 0.

Subsequently, the ECU 22 proceeds to step S319, in which the ECU 22 controls the low-pressure EGR valve 5 by the low-pressure EGR valve opening degree control command value t_DL determined in step S318, and also controls the high-pressure EGR valve 21 by the high-pressure EGR valve opening degree control command value t_DH determined in step S318.

After executing step S319, the ECU ends the present execution of the routine.

FIG. 6 is a flowchart representing an EGR gas amount correction control routine performed when it is determined that the temperature of low-pressure EGR gas is high.

Firstly, in step S320, the ECU 22 determines which one of the operation regions in FIG. 2 the state of operation of the internal combustion engine 1 belongs to on the basis of the state of operation of the internal combustion engine 1 detected in step S301.

If in step S320 it is determined that the state of operation of the internal combustion engine 1 belongs to the HPL region shown in FIG 2, the ECU 22 proceeds to step S321.

In step S321, the ECU 22 sets the opening degree control command value t_DL for the low-pressure EGR valve 5 at 0, and sets the opening degree control command value t_DH for the high-pressure EGR valve 21 at the basic high-pressure EGR valve opening degree DH.

Subsequently, the ECU 22 proceeds to step S328, in which the ECU 22 controls the low-pressure EGR valve 5 by the low-pressure EGR valve opening degree control command value t_DL determined in step S321, and also controls the high-pressure EGR valve 21 by the high-pressure EGR valve opening degree control command value t_DH determined in step S321.

After executing step S328, the ECU ends the present execution of the routine.

If in step S320 it is determined that the state of operation of the internal combustion engine 1 belongs to the MIX region shown in FIG. 2, the ECU 22 proceeds to step S322.

In step S322, the ECU 22 determines whether or not the temperature of the high-pressure EGR gas satisfies a high-pressure EGR increase permission condition. The high-pressure EGR increase permission condition herein is a condition of the high-pressure EGR gas temperature at which the NOx production amount can be reduced by increasing the high-pressure EGR gas amount.

If an affirmative determination is made in step S322, the ECU 22 proceeds to step S323. On the other hand, if a negative determination is made in step S322, the ECU 22 proceeds to step S3 31 described later.

In step S323, the ECU 22 fins a low-pressure EGR reducing correction coefficient KML that determines a reducing correction amount for the low-pressure EGR gas amount which is in accordance with the elapsed time following the end of the filter regeneration process, and finds a high-pressure EGR increasing correction coefficient KMHI that determines an increasing correction amount for the high-pressure EGR gas amount which is in accordance with the elapsed time following the end of the filter regeneration process.

Concretely, from a map that determines the low-pressure EGR reducing correction coefficient KML in accordance with the post-regeneration counter Δt, the ECU 22 finds a low-pressure EGR reducing correction coefficient KML that corresponds to the post-regeneration counter Δt found in step S305. Likewise, from a map that determines the high-pressure EGR increasing correction coefficient KMHI in accordance with the post-regeneration counter Δt, the ECU 22 finds a high-pressure EGR increasing correction coefficient KMHI that corresponds to the post-regeneration counter Δt found in step S305. These maps are found beforehand through experiments or the like, and are stored in the ROM in ECU 22.

The low-pressure EGR reducing correction coefficient KML is a numerical value that is smaller than 1, and may be a constant, or may also be a value that is found by an increasing function related the elapsed time following the end of the filter regeneration process. Besides, the high-pressure EGR increasing correction coefficient KMHI is a numerical value that is larger than 1, and may be a constant, or may also be a value that is found by a decreasing function related to the elapsed time following the end of the filter regeneration process.

Subsequently in step S324, the ECU 22 sets the opening degree control command value t_DL for the low-pressure EGR valve 5 at the multiplication product of the basic low-pressure EGR valve opening degree DL and the low-pressure EGR reducing correction coefficient KML found in step S323. That is, the ECU 22 sets the opening degree control command value t_DL as in t_DL=DL×KML. Besides, the ECU 22 sets the opening degree control command value t_DH for the high-pressure EGR valve 21 at the multiplication product of the basic high-pressure EGR valve opening degree DH and the high-pressure EGR increasing correction coefficient KMHI found in step S323. That is, the ECU 22 sets the opening degree control command value t_DH as in t_DH=DH×KMHI.

Subsequently, the ECU 22 proceeds to step S328, in which the ECU 22 controls the low-pressure EGR valve 5 by the low-pressure EGR valve opening degree control command value t_DL determined in step S324, and controls the high-pressure EGR valve 21 by the high-pressure EGR valve opening degree control command value t_DH determined in step S324.

After executing step S328, the ECU ends the present execution of the routine.

On the other hand, if a negative determination is made in step S322, the ECU 22 proceeds to step S331.

In step S331, the ECU 22 finds a low-pressure EGR reducing correction coefficient KML that determines a reducing correction amount for the low-pressure EGR gas amount in accordance with the elapsed time following the end of the filter regeneration process.

Concretely, from a map that determines the low-pressure EGR reducing correction coefficient KML in accordance with the post-regeneration counter Δt, the ECU 22 finds a low-pressure EGR reducing correction coefficient KML that corresponds to the post-regeneration counter Δt found in step S305. This map is found beforehand through experiments or the like, and is stored in the ROM in the ECU 22.

The low-pressure EGR reducing correction coefficient KML is a numerical value that is smaller than 1, and may be a constant, or may also be a value that is found by an increasing function related to the elapsed time following the end of the filter regeneration process.

Subsequently in step S332, the ECU 22 sets the opening degree control command value t_DL for the low-pressure EGR valve 5 at the multiplication product of the basic low-pressure EGR valve opening degree DL and the low-pressure EGR reducing correction coefficient KML found in step S331. That is, the ECU 22 sets the opening degree control command value t_DL as in t_DL=DLxKML. Besides, the ECU 22 sets the opening degree control command value t_DH for the high-pressure EGR valve 21 at the basic high-pressure EGR valve opening degree DH.

Subsequently, the ECU 22 proceeds to step S328, in which the ECU 22 controls the low-pressure EGR valve 5 by the low-pressure EGR valve opening degree control command value t_DL determined in step S332, and controls the high-pressure EGR valve 21 by the high-pressure EGR valve opening degree control command value t_DH determined in step S332.

After executing step S328, the ECU ends the present execution of the routine.

If in step S320 it is determined that the state of operation of the internal combustion engine 1 belongs to the LPL region shown in FIG. 2, the ECU 22 proceeds to step S325.

In step S325, the ECU 22 finds a low-pressure EGR reducing correction coefficient KL that determines a reducing correction amount for the low-pressure EGR gas amount which is in accordance with the elapsed time following the end of the filter regeneration process.

Concretely, from a map that determines the low-pressure EGR reducing correction coefficient KL in accordance with the post-regeneration counter Δt, the ECU 22 finds a low-pressure EGR reducing correction coefficient KL that corresponds to the post-regeneration counter Δt found in step S305. This map is found beforehand through experiments or the like, and is stored in the ROM in ECU 22.

The low-pressure EGR reducing correction coefficient KL is a numerical value that is smaller than 1, and may be constant, or may also be a value that is found by an increasing function related to the elapsed time following the end of the filter regeneration process.

Subsequently in step S326, the ECU 22 sets the opening degree control command value t_DL for the low-pressure EGR valve 5 at the multiplication product of the basic low-pressure EGR valve opening degree DL and the low-pressure EGR reducing correction coefficient KL found in step S325. That is, the ECU 22 sets opening degree control command value t_DL as in t_DL=DL×KL. Besides, the ECU 22 sets the opening degree control command value t_DH for the high-pressure EGR valve 2l at 0.

Subsequently, the ECU 22 proceeds to step S328, in which the ECU 22 controls the low-pressure EGR valve 5 by the low-pressure EGR valve opening degree control command value t_DL determined in step S326, and controls the high-pressure EGR valve 21 by the high-pressure EGR valve opening degree control command value t_DH determined in step S326.

After executing step S328, the ECU ends the present execution of the routine.

If in step S320 it is determined that the state of operation of the internal combustion engine 1 belongs to the region shown in FIG. 2 in which the EGR is not performed, the ECU 22 proceeds to step S327.

In step S327, the ECU 22 sets the opening degree control command value t_DL for the low-pressure EGR valve 5 at 0, and sets the opening degree control command value t_DH for the high-pressure EGR valve 21 at 0.

Subsequently, the ECU 22 proceeds to step S328, in which the ECU 22 controls the low-pressure EGR valve 5 by the low-pressure EGR valve opening degree control command value t_DL determined in step S327, and controls the high-pressure EGR valve 21 by the high-pressure EGR valve opening degree control command value t_DH determined in step S327.

After executing step S328, the ECU ends the present execution of the routine.

FIG 7 is a flowchart representing an EGR gas amount correction control routine performed when it is determined that the temperature of low-pressure EGR gas and the temperature of high-pressure EGR gas are high.

Firstly, in step S341 , the ECU 22 determines which one of the operation regions in FIG. 2 the state of operation of the internal combustion engine 1 belongs to on the basis of the state of operation of the internal combustion engine 1 detected in step S301.

If in step S341 it is determined that the state of operation of the internal combustion engine 1 belongs to the HPL region shown in FIG. 2, the ECU 22 proceeds to step S342.

In step S342, the ECU 22 finds a high-pressure EGR reducing correction coefficient KH that determines a reducing correction amount for the high-pressure EGR gas amount in accordance with the elapsed time following the end of the filter regeneration process. Concretely, from a map that determines the high-pressure EGR reducing correction coefficient KH in accordance with the post-regeneration counter Δt, the ECU 22 finds a high-pressure EGR reducing correction coefficient KH that corresponds to the post-regeneration counter Δt found in step S305. This map is found beforehand through experiments or the like, and is stored in the ROM in ECU 22.

The high-pressure EGR reducing correction coefficient KH is a numerical value that is smaller than 1, and may be constant, or may also be a value that is found by an increasing function that is related to the elapsed time following the end of the filter regeneration process.

Subsequently in step S343, the ECU 22 sets the opening degree control command value t_DL for the low-pressure EGR valve 5 at 0, and sets the opening degree control command value t_DH for the high-pressure EGR valve 21 at the multiplication product of the basic high-pressure EGR valve opening degree DH and the high-pressure EGR reducing correction coefficient KH found in step S342. That is, the ECU 22 sets the opening degree control command value t_DH as in t_DH=DH×KH.

Subsequently, the ECU 22 proceeds to step S349, in which the ECU 22 controls the low-pressure EGR valve 5 by the low-pressure EGR valve opening degree control command value t_DL determined in step S343, and controls the high-pressure EGR valve 21 by the high-pressure EGR valve opening degree control command value t_DH determined in step S343.

After executing step S349, the ECU ends the present execution of the routine.

If in step S341 it is determined that the state of operation of the internal combustion engine 1 belongs to the MIX region shown in FIG. 2, the ECU 22 proceeds to step S344.

In step S344, the ECU 22 finds a low-pressure EGR reducing correction coefficient KML that determines a reducing correction amount for the low-pressure EGR gas amount which is in accordance with the elapsed time following the end of the filter regeneration process, and a high-pressure EGR reducing correction coefficient KMH that determines a reducing correction amount for the high-pressure EGR gas amount which is in accordance with the elapsed time following the end of the filter regeneration process.

Concretely, from a map that determines the low-pressure EGR reducing correction coefficient KML in accordance with the post-regeneration counter Δt, the ECU 22 finds a low-pressure EGR reducing correction coefficient KML that corresponds to the post-regeneration counter Δt found in step S305. Likewise, from a map that determines the high-pressure EGR reducing correction coefficient KMH in accordance with the post-regeneration counter Δt, the ECU 22 finds a high-pressure EGR reducing correction coefficient KMH that corresponds to the post-regeneration counter Δt found in step S305. These maps are found beforehand through experiments or the like, and are stored in the ROM in ECU 22.

Each of the low-pressure EGR reducing correction coefficient KML and the high-pressure EGR reducing correction coefficient KMH is a numerical value that is smaller than 1, and may be a constant, or may also be a value that is found by an increasing function that is related to the elapsed time following the end of the filter regeneration process.

Subsequently in step S345, the ECU 22 sets the opening degree control command value t_DL for the low-pressure EGR valve 5 at the multiplication product of the basic low-pressure EGR valve opening degree DL and the low-pressure EGR reducing correction coefficient KML found in step S344. That is, the ECU 22 sets opening degree control command value t_DL as in t_DL=DL×KML. Besides, the ECU 22 sets the opening degree control command value t_DH for the high-pressure EGR valve 21 at the multiplication product of the basic high-pressure EGR valve opening degree DH and the high-pressure EGR reducing correction coefficient KMH found in step S344. That is, the ECU 22 sets the opening degree control command value t_DH as in t DH=DHxKMH.

Subsequently, the ECU 22 proceeds to step S349, in which the ECU 22 controls the low-pressure EGR valve 5 by the low-pressure EGR valve opening degree control command value t_DL determined in step S345, and controls the high-pressure EGR valve 21 by the high-pressure EGR valve opening degree control command value t_DH determined in step S345.

After executing step S349, the ECU ends the present execution of the routine.

If in step S341 it is determined that the state of operation of the internal combustion engine 1 belongs to the LPL region shown in FIG 2, the ECU 22 proceeds to step S346.

In step S346, the ECU 22 finds a low-pressure EGR reducing correction coefficient KL that determines a reducing correction amount for the low-pressure EGR gas amount which is in accordance with the elapsed time following the end of the filter regeneration process.

Concretely, from a map that determines the low-pressure EGR reducing correction coefficient KL in accordance with the post-regeneration counter Δt, the ECU 22 finds a low-pressure EGR reducing correction coefficient KL that corresponds to the post-regeneration counter Δt found in step S305. This map is found beforehand through experiments or the like, and is stored in the ROM in ECU 22.

The low-pressure EGR reducing correction coefficient KL is a numerical value that is smaller than 1, and may be a constant, or may also be a value that is found by an increasing function that is related to the elapsed time following the end of the filter regeneration process.

Subsequently in step S347, the ECU 22 sets the opening degree control command value t_DL for the low-pressure EGR valve 5 at the multiplication product of the basic low-pressure EGR valve opening degree DL and the low-pressure EGR reducing correction coefficient KL found in step S346. That is, the ECU 22 sets the opening degree control command value t_DL as in t_DL=DL×KL. Besides, the ECU 22 sets the opening degree control command value t_DH for the high-pressure EGR valve 21 at 0.

Subsequently, the ECU 22 proceeds to step S349, in which the ECU 22 controls the low-pressure EGR valve 5 by the low-pressure EGR valve opening degree control command value t_DL determined in step S347, and controls the high-pressure EGR valve 21 by the high-pressure EGR valve opening degree control command value t_DH determined in step S347.

After executing step S349, the ECU ends the present execution of the routine.

If in step S341 it is determined that the state of operation of the internal combustion engine 1 belongs to the region shown in FIG. 2 in which the EGR is not performed, the ECU 22 proceeds to step S348.

In step S348, the ECU 22 sets the opening degree control command value t_DL for the low-pressure EGR valve 5 at 0, and also sets the opening degree control command value t_DH for the high-pressure EGR valve 21 at 0.

Subsequently, the ECU 22 proceeds to step S349, in which the ECU 22 controls the low-pressure EGR valve 5 by the low-pressure EGR valve opening degree control command value t_DL determined in step S348, and controls the high-pressure EGR valve 21 by the high-pressure EGR valve opening degree control command value t_DH determined in step S348.

After executing step S349, the ECU ends the present execution of the routine.

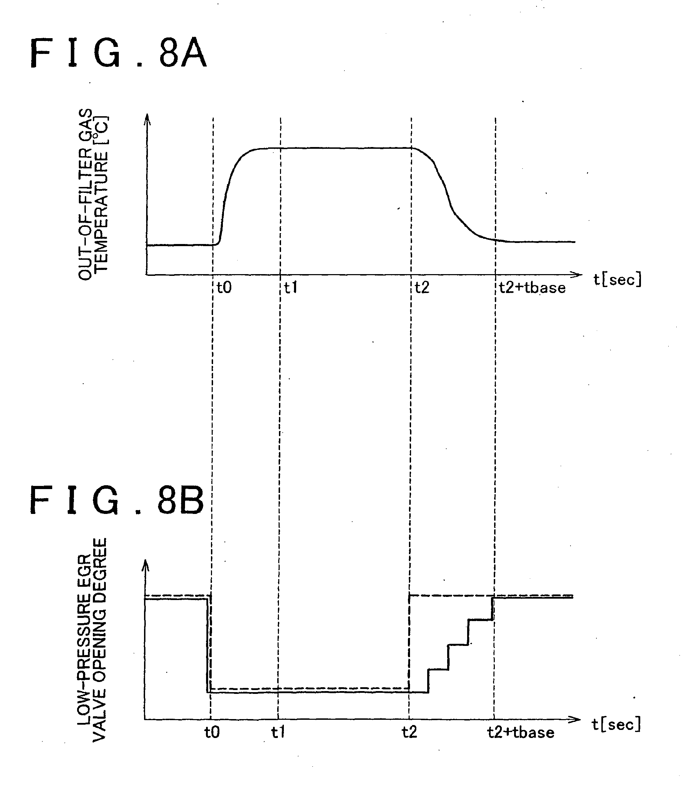

FIGS. 8A and 8B are time charts showing time-dependent changes in the low-pressure EGR gas temperature and the low-pressure EGR valve opening degree during the EGR gas amount reducing correction control, in the case where, after the filter regeneration process ends, it is determined that the temperature of low-pressure EGR gas is higher than the first reference temperature, and the reducing correction control with respect to the low-pressure EGR gas amount is performed when the state of operation of the internal combustion engine 1 belongs to the MIX region or the LPL region.

FIG. 8A shows time-dependent changes in the temperature of the exhaust gas that is discharged from the exhaust purification device 32. In FIG. 8A, the horizontal axis represents time, and the vertical axis represents the exhaust gas temperature. FIG. 8B shows time-dependent changes in the opening degree of the low-pressure EGR valve 5. In FIG. 8B, the horizontal axis represents time, and the vertical axis represents the opening degree of the low-pressure EGR valve 5. In FIG.8B, the line drawn as a dashed line represents time-dependent changes in the low-pressure EGR valve opening degree in the case where the related-art low-pressure EGR valve opening degree control is performed, and the line drawn as a solid line represents time-dependent changes in the low-pressure EGR valve opening degree in the case where the low-pressure EGR valve opening degree control of this embodiment is performed.

In FIGS. 8A and 8B, the filter regeneration process starts at time t0, and the temperature of the exhaust gas discharged from the exhaust purification device 32 begins to increase. Then, the low-pressure EGR valve opening degree is reduced synchronously with the start of the filter regeneration process.

Due to the temperature-raising process performed in a period of time t0 to time t1, the temperature of the filter 20 is raised, and correspondingly the temperature of the exhaust gas that flows out of the exhaust purification device 32 increases.

At time t2, the filter regeneration process ends. At this time point, the low-pressure EGR valve opening degree is returned to the basic low-pressure EGR valve opening degree as shown by the dashed line in FIG 8B, in the related-art low-pressure EGR valve opening degree control. However, as shown in FIG. 8A, for a certain period from time t2, the temperature of the exhaust gas discharged from the exhaust purification device 32 is still high, but the temperature gradually decreases as time elapses from time t2.

Therefore, in the case where the related-art low-pressure EGR valve opening degree control is performed, the end of the filter regeneration process is immediately followed by the recirculation of a large amount of exhaust gas whose temperature is still high via the low-pressure EGR passage 23, giving increase to a risk of various fault occurring in the intake system or the EGR system.

In this embodiment, however, as shown by the solid line in FIG. 8B, the end of the filter regeneration process is followed by a certain period during which the low-pressure EGR valve opening degree is kept small, and after that, in accordance with the transition of the exhaust gas temperature, the low-pressure EGR valve opening degree is enlarged stepwise until the exhaust gas temperature returns to the basic low-pressure EGR valve opening degree.

Specifically, if the exhaust gas temperature is high immediately following the end of the filter regeneration process, the low-pressure EGR gas amount is made small. Then, as the low-pressure EGR gas temperature decreases, the low-pressure EGR gas amount is gradually returned to the basic low-pressure EGR gas amount. This restrains the event in which the end of the filter regeneration process is immediately followed by the recirculation of a large amount of high-temperature exhaust gas via the low-pressure EGR passage 23.

Incidentally, in this embodiment, the low-pressure EGR valve opening degree, after the end of the filter regeneration process, is gradually enlarged, that is, returned stepwise to the basic low-pressure EGR valve opening, as the elapsed time following the end of the filter regeneration process increases. After the filter regeneration process ends, the low-pressure EGR gas temperature gradually decreases to the temperature that occurs at an ordinary time, and therefore the reducing correction amount for the low-pressure EGR gas amount can be correspondingly made smaller.

Since the reducing correction of the low-pressure EGR gas amount leads to a decrease in the EGR rate, the amount of production of NOx can be reduced by lessening the reducing correction amount for the low-pressure EGR gas amount as early as possible. As a result, it becomes possible to achieve both the restraint of the amount of NOx emission and the restraint of the occurrence of a fault caused by recirculation of a large amount of high-temperature exhaust gas via the low-pressure EGR passage 23.

The foregoing embodiment can be modified in various manners without departing from the scope of the invention. For example, the embodiment is described above in conjunction with the reducing correction control regarding the EGR gas amount that is performed in the case where the temperature of EGR gas becomes high due to the carrying out of the filter regeneration process on the filter that is provided as an exhaust purification device. However, the invention is also similarly applicable to the case where the EGR gas temperature becomes high due to a sulfur poisoning recovery control of a NOx catalyst that is provided as an exhaust purification device.

In the foregoing embodiment, the foregoing embodiment is described above in conjunction with the reducing correction control of returning the low-pressure EGR valve opening degree stepwise to the basic low-pressure EGR valve opening degree after the filter regeneration process ends. However, the invention is applicable to any control as long as it includes a control of making the low-pressure EGR valve opening degree smaller than the basic low-pressure EGR valve opening degree for a while following the end of the filter regeneration process. For example, in FIG. 8B, the low-pressure EGR valve opening degree maintained during the execution of the filter regeneration process may be held until the time t2+tbase, at which the low-pressure EGR valve opening degree is returned to the basic low-pressure EGR valve opening degree.

Furthermore, although the foregoing time chart illustrates only the control of the low-pressure EGR valve opening degree, substantially the same opening degree control can also be performed with respect to the high-pressure EGR valve opening degree. Furthermore, the high-pressure EGR valve opening degree control and the low-pressure EGR valve opening degree control do not need to be the same in the manner of control.

According to the embodiments described above, in an exhaust purification system that performs recirculation of exhaust gas via an EGR passage, it becomes possible to restrain the event in which a fault is caused in the intake system or the EGR system by high-temperature exhaust gas when a temperature-raising process is performed on an exhaust purification device.

## Claims

1. An exhaust purification system of an internal combustion engine, including an EGR passage (15, 23) that connects an exhaust passage (19) of the internal combustion engine and an intake passage (9) of the internal combustion engine; EGR gas amount determination means for determining a basic amount of EGR gas recirculated into the internal combustion engine via the EGR passage (15, 23) in accordance with a state of operation of the internal combustion engine; an exhaust purification device (32) provided in the exhaust passage (19); and temperature raise means for performing a temperature-raising process of raising a temperature of the exhaust purification device (32), the exhaust purification system **characterized by** comprising:
determination means for determining whether or not a temperature of EGR gas is above a predetermined reference temperature; and
correction means for decreasing the amount of EGR gas from the basic amount of EGR gas determined by the EGR gas amount determination means, during a period that it is determined by the determination means that the temperature of EGR gas is above the reference temperature after the temperature-raising process ends.

2. The exhaust purification system according to claim 1, further comprising: a turbocharger (10) that has a compressor (6) on the intake passage (9) of the internal combustion engine and that has a turbine (7) on the exhaust passage (19) of the internal combustion engine; and EGR switching means for recirculating exhaust gas into the internal combustion engine by selectively using one or both of a low-pressure EGR passage (23) and a high-pressure EGR passage (15) that compose the EGR passage (15, 23) in accordance with the state of operation of the internal combustion engine, wherein the exhaust purification device (32) is provided in the exhaust passage (19) downstream of the turbine (7), and the low-pressure EGR passage (23) connects the exhaust passage (19) downstream of the exhaust purification device (32) and the intake passage (9) upstream of the compressor (6), and the high-pressure EGR passage (15) connects the exhaust passage (19) upstream of the turbine (7) and the intake passage (9) downstream of the compressor (6), wherein
the EGR gas amount determination means determines the basic amount of low-pressure EGR gas recirculated into the internal combustion engine via the low-pressure EGR passage (23) and the basic amount of high-pressure EGR gas recirculated into the internal combustion engine via the high-pressure EGR passage (15) in accordance with the state of operation of the internal combustion engine,
the determination means determines whether or not the temperature of low-pressure EGR gas is above a predetermined first reference temperature, and
the correction means decreases the amount of low-pressure EGR gas from the basic amount of low-pressure EGR gas determined by the EGR gas amount determination means during a period that it is determined by the determination means that the temperature of the low-pressure EGR gas is above the first reference temperature when the state of operation of the internal combustion engine is a state of operation that recirculation of exhaust gas is performed by using only the low-pressure EGR passage (23) or a state of operation that the recirculation of exhaust gas is performed by using both the low-pressure EGR passage (23) and the high-pressure EGR passage (15) after the execution of the temperature-raising process ends.

3. The exhaust purification system according to claim 1, further comprising: a turbocharger (10) that has a compressor (6) on the intake passage (9) of the internal combustion engine and that has a turbine (7) on the exhaust passage (19) of the internal combustion engine; and EGR switching means for recirculating exhaust gas into the internal combustion engine by selectively using one or both of a low-pressure EGR passage (23) and a high-pressure EGR passage (15) that compose the EGR passage (15, 23) in accordance with the state of operation of the internal combustion engine, wherein the exhaust purification device (32) is provided in the exhaust passage (19) downstream of the turbine (7), and the low-pressure EGR passage (23) connects the exhaust passage (19) downstream of the exhaust purification device (32) and the intake passage (9) upstream of the compressor (6), and the high-pressure EGR passage (15) connects the exhaust passage (19) upstream of the turbine (7) and the intake passage (9) downstream of the compressor (6), wherein
the EGR gas amount determination means determines the basic amount of low-pressure EGR gas recirculated into the internal combustion engine via the low-pressure EGR passage (23) and the basic amount of high-pressure EGR gas recirculated into the internal combustion engine via the high-pressure EGR passage (15) in accordance with the state of operation of the internal combustion engine,
the determination means determines whether or not the temperature of high-pressure EGR gas is above a predetermined second reference temperature, and
the correction means decreases the amount of high-pressure EGR gas from the basic amount of high-pressure EGR gas determined by the EGR gas amount determination means during a period that it is determined by the determination means that the temperature of the high-pressure EGR gas is above the second reference temperature, when the state of operation of the internal combustion engine is a state of operation that recirculation of exhaust gas is performed by using only the high-pressure EGR passage (15) or a state of operation that the recirculation of exhaust gas is performed by using both the low-pressure EGR passage (23) and the high-pressure EGR passage (15) after the execution of the temperature-raising process ends.

4. The exhaust purification system according to claim 2, wherein the correction means decreases the amount of low-pressure EGR gas from the basic amount of low-pressure EGR gas determined by the EGR gas amount determination means and, provided that the temperature of high-pressure EGR gas satisfies a predetermined high-pressure EGR increase permission condition, increases the amount of high-pressure EGR gas from the basic amount of high-pressure EGR gas determined by the EGR gas amount determination means, during the period that it is determined by the determination means that the temperature of the low-pressure EGR gas is above the first reference temperature when the state of operation of the internal combustion engine is a state of operation that the recirculation of exhaust gas is performed by using both the low-pressure EGR passage (23) and the high-pressure EGR passage (15) after the execution of the temperature-raising process ends.

5. The exhaust purification system according to claim 3, wherein the correction means decreases the amount of high-pressure EGR gas from the basic amount of high-pressure EGR gas determined by the EGR gas amount determination means and, provided that the temperature of low-pressure EGR gas satisfies a predetermined low-pressure EGR increase permission condition, increases the amount of low-pressure EGR gas from the basic amount of low-pressure EGR gas determined by the EGR gas amount determination means, during the period that it is determined by the determination means that the temperature of the high-pressure EGR gas is above the second reference temperature when the state of operation of the internal combustion engine is a state of operation that the recirculation of exhaust gas is performed by using both the low-pressure EGR passage (23) and the high-pressure EGR passage (15) after the execution of the temperature-raising process ends.

6. The exhaust purification system according to claim 1, wherein the correction means decreases an amount of decrease in the amount EGR gas as an elapsed time following a time point of end of the temperature-raising process increases.

7. The exhaust purification system according to claim 2 or 4, wherein the correction means decreases an amount of decrease in the amount of low-pressure EGR gas as an elapsed time following a time point of end of the temperature-raising process increases.

8. The exhaust purification system according to claim 3 or 5, wherein the correction means decreases an amount of decrease in the amount of high-pressure EGR gas as an elapsed time following a time point of end of the temperature-raising process increases.

9. The exhaust purification system according to claim 4, wherein the correction means decreases an amount of increase in the amount of high-pressure EGR gas as an elapsed time following a time point of end of the temperature-raising process increases.

10. The exhaust purification system according to claim 5, wherein the correction means decreases an amount of increase in the amount of low-pressure EGR gas as an elapsed time following a time point of end of the temperature-raising process increases.

11. The exhaust purification system according to claim 4 or 9, wherein the high-pressure EGR increase permission condition is a condition of the temperature of high-pressure EGR gas that allows a NOx production amount to be decreased by increasing the amount of high-pressure EGR gas.

12. The exhaust purification system according to claim 5 or 10, wherein the low-pressure EGR increase permission condition is a condition of the temperature of low-pressure EGR gas that allows a NOx production amount to be decreased by increasing the amount of low-pressure EGR gas.

13. An exhaust purification method of an internal combustion engine, wherein the internal combustion engine including: an EGR passage (15, 23) that connects an exhaust passage (19) of the internal combustion engine and an intake passage (9) of the internal combustion engine; EGR gas amount determination means for determining a basic amount of EGR gas recirculated into the internal combustion engine via the EGR passage (15, 23) in accordance with a state of operation of the internal combustion engine; an exhaust purification device (32) provided in the exhaust passage (19); and temperature raise means for performing a temperature-raising process of raising a temperature of the exhaust purification device (32), the exhaust purification method **characterized by** comprising:
determining whether or not a temperature of EGR gas is above a predetermined reference temperature; and
decreasing the amount of EGR gas from the basic amount of EGR gas determined by the EGR gas amount determination means, during a period that it is determined that the temperature of EGR gas is above the reference temperature after the temperature-raising process ends.

14. The exhaust purification method according to claim 13, wherein the internal combustion engine further comprising: a turbocharger (10) that has a compressor (6) on the intake passage (9) of the internal combustion engine and that has a turbine (7) on the exhaust passage (19) of the internal combustion engine; and EGR switching means for recirculating exhaust gas into the internal combustion engine by selectively using one or both of a low-pressure EGR passage (23) and a high-pressure EGR passage (15) that compose the EGR passage (15, 23) in accordance with the state of operation of the internal combustion engine, wherein the exhaust purification device (32) is provided in the exhaust passage (19) downstream of the turbine (7), and the low-pressure EGR passage (23) connects the exhaust passage (19) downstream of the exhaust purification device (32) and the intake passage (9) upstream of the compressor (6), and the high-pressure EGR passage (15) connects the exhaust passage (19) upstream of the turbine (7) and the intake passage (9) downstream of the compressor (6), the exhaust purification method, wherein
the basic amount of low-pressure EGR gas recirculated into the internal combustion engine via the low-pressure EGR passage (23) and the basic amount of high-pressure EGR gas recirculated into the internal combustion engine via the high-pressure EGR passage (15) in accordance with the state of operation of the internal combustion engine are determined,
it is determined whether or not the temperature of low-pressure EGR gas is above a predetermined first reference temperature, and
the amount of low-pressure EGR gas is decreased from the basic amount of low-pressure EGR gas determined by the EGR gas amount determination means during a period that it is determined that the temperature of the low-pressure EGR gas is above the first reference temperature when the state of operation of the internal combustion engine is a state of operation that recirculation of exhaust gas is performed by using only the low-pressure EGR passage (23) or a state of operation that the recirculation of exhaust gas is performed by using both the low-pressure EGR passage (23) and the high-pressure EGR passage (15) after the execution of the temperature-raising process ends.

15. The exhaust purification method according to claim 13, wherein the internal combustion engine further comprising: a turbocharger (10) that has a compressor (6) on the intake passage (9) of the internal combustion engine and that has a turbine (7) on the exhaust passage (19) of the internal combustion engine; and EGR switching means for recirculating exhaust gas into the internal combustion engine by selectively using one or both of a low-pressure EGR passage (23) and a high-pressure EGR passage (15) that compose the EGR passage (15, 23) in accordance with the state of operation of the internal combustion engine, wherein the exhaust purification device (32) is provided in the exhaust passage (19) downstream of the turbine (7), and the low-pressure EGR passage (23) connects the exhaust passage (19) downstream of the exhaust purification device (32) and the intake passage (9) upstream of the compressor (6), and the high-pressure EGR passage (15) connects the exhaust passage (19) upstream of the turbine (7) and the intake passage (9) downstream of the compressor (6), the exhaust purification method, wherein
the basic amount of low-pressure EGR gas recirculated into the internal combustion engine via the low-pressure EGR passage (23) and the basic amount of high-pressure EGR gas recirculated into the internal combustion engine via the high-pressure EGR passage (15) in accordance with the state of operation of the internal combustion engine are determined,
it is determined whether or not the temperature of high-pressure EGR gas is above a predetermined second reference temperature, and
the amount of high-pressure EGR gas is decreased from the basic amount of high-pressure EGR gas determined by the EGR gas amount determination means during a period that it is determined that the temperature of the high-pressure EGR gas is above the second reference temperature when the state of operation of the internal combustion engine is a state of operation that recirculation of exhaust gas is performed by using only the high-pressure EGR passage (15) or a state of operation that the recirculation of exhaust gas is performed by using both the low-pressure EGR passage (23) and the high-pressure EGR passage (15) after the execution of the temperature-raising process ends.

16. The exhaust purification method according to claim 14, wherein the amount of low-pressure EGR gas is decreased from the basic amount of low-pressure EGR gas determined by the EGR gas amount determination means and, provided that the temperature of high-pressure EGR gas satisfies a predetermined high-pressure EGR increase permission condition, the amount of high-pressure EGR gas is increased from the basic amount of high-pressure EGR gas determined by the EGR gas amount determination means, during the period that it is determined that the temperature of the low-pressure EGR gas is above the first reference temperature when the state of operation of the internal combustion engine is a state of operation that the recirculation of exhaust gas is performed by using both the low-pressure EGR passage (23) and the high-pressure EGR passage (15) after the execution of the temperature-raising process ends.

17. The exhaust purification method according to claim 15, wherein the amount of high-pressure EGR gas is decreased from the basic amount of high-pressure EGR gas determined by the EGR gas amount determination means and, provided that the temperature of low-pressure EGR gas satisfies a predetermined low-pressure EGR increase permission condition, the amount of low-pressure EGR gas is increased from the basic amount of low-pressure EGR gas determined by the EGR gas amount determination means, during the period that it is determined that the temperature of the high-pressure EGR gas is above the second reference temperature when the state of operation of the internal combustion engine is a state of operation that the recirculation of exhaust gas is performed by using both the low-pressure EGR passage (23) and the high-pressure EGR passage (15) after the execution of the temperature-raising process ends.

18. The exhaust purification method according to claim 13, wherein an amount of decrease in the amount EGR gas is decreased as an elapsed time following a time point of end of the temperature-raising process increases.

19. The exhaust purification method according to claim 14 or 16, wherein an amount of decrease in the amount of low-pressure EGR gas is decreased as an elapsed time following a time point of end of the temperature-raising process increases.

20. The exhaust purification method according to claim 15 or 17, wherein an amount of decrease in the amount of high-pressure EGR gas is decreased as an elapsed time following a time point of end of the temperature-raising process increases.

21. The exhaust purification method according to claim 16, wherein an amount of increase in the amount of high-pressure EGR gas is decreased as an elapsed time following a time point of end of the temperature-raising process increases.

22. The exhaust purification method according to claim 17, wherein an amount of increase in the amount of low-pressure EGR gas is decreased as an elapsed time following a time point of end of the temperature-raising process increases.

23. The exhaust purification method according to claim 16 or 21, wherein the high-pressure EGR increase permission condition is a condition of the temperature of high-pressure EGR gas that allows a NOx production amount to be decreased by increasing the amount of high-pressure EGR gas.

24. The exhaust purification method according to claim 17 or 22, wherein the low-pressure EGR increase permission condition is a condition of the temperature of low-pressure EGR gas that allows a NOx production amount to be decreased by increasing the amount of low-pressure EGR gas.

## Patentansprüche

1. Abgasreinigungssystem für eine Verbrennungskraftmaschine, umfassend einen Abgasrückführungskanal (15, 23), der einen Abgaskanal (19) der Verbrennungskraftmaschine und einen Ansaugkanal (9) der Verbrennungskraftmaschine verbindet, ein Bestimmungsmittel für die rückzuführende Abgasmenge zur Bestimmung einer Grundmenge des rückzuführenden Abgases, die gemäß einem Betriebszustand der Verbrennungskraftmaschine über den Abgasrückführungskanal (15, 23) in die Verbrennungskraftmaschine rückgeführt wird, eine Abgasreinigungsvorrichtung (32), die in dem Abgaskanal (19) vorgesehen ist, und ein Temperaturerhöhungsmittel zum Ausführen eines Tenlperaturerhöhungsvorgangs zum Erhöhen einer Temperatur der Abgasreinigungsvorrichtung (32), wobei das Abgasreinigungssystem **dadurch gekennzeichnet ist, daß** es umfaßt:
ein Bestimmungsmittel zur Bestimmung, ob eine Temperatur des rückzuführenden Abgases über einer vorgegebenen Bezugstemperatur liegt oder nicht, und
ein Korrekturmittel zum Vermindern der rückzuführenden Abgasmenge aus der Grundmenge des von dem Bestimmungsmittel für die rückzuführende Abgasmenge bestimmten, rückzuführenden Abgases während eines Zeitraums, in dem von dem Bestimmungsmittel bestimmt wird, das die Temperatur des rückzuführenden Abgases nach dem Ende des Temperaturerhöhungsvorgangs über der vorgegebenen Bezugstemperatur liegt.

2. Abgasreinigungssystem nach Anspruch 1, außerdem umfassend: einen Turbolader (10), der in dem Ansaugkanal (9) der Verbrennungskraftmaschine einen Verdichter (6) aufweist und in dem Abgaskanal (19) der Verbrennungskraftmaschine eine Turbine (7) besitzt, sowie ein Schaltmittel für das rückzuführenden Abgas zum Rückführen von Abgas in die Verbrennungskraftmaschine durch wahlweise Verwendung von einem oder beiden von einem Abgasrückführungskanal niedrigen Drucks (23) und einem Abgasrückführungskanal hohen Drucks (15), aus denen der Abgasrückführungskanal (15, 23) besteht, gemäß dem Betriebszustand der Verbrennungskraftmaschine, wobei die Abgasreinigungsvorrichtung (32) in dem Abgaskanal (19) stromab der Turbine (7) vorgesehen ist und der Abgasrückführungskanal niedrigen Drucks (23) den Abgaskanal (19) stromab der Abgasreinigungsvorrichtung (32) und den Ansaugkanal (9) stromauf des Verdichters (6) verbindet und der Abgasrückführungskanal hohen Drucks (15) den Abgaskanal (19) stromauf der Turbine (7) und den Ansaugkanal (9) stromab des Verdichters verbindet, wobei
das Bestimmungsmittel für die rückzuführende Abgasmenge die Grundmenge des rückzuführenden Abgases niedrigen Drucks, das über den Abgasrückführungskanal niedrigen Drucks (23) in die Verbrennungskraftmaschine rückgeführt wird, und die Grundmenge des rückzuführenden Abgases hohen Drucks bestimmt, die gemäß dem Betriebszustand der Verbrennungskraftmaschine über den Abgasrückführungskanal hohen Drucks (15) in die Verbrennungskraftmaschine rückgeführt wird,
das Bestimmungsmittel bestimmt, ob die Temperatur des rückzuführenden Abgases niedrigen Drucks über einer vorgegebenen, ersten Bezugstemperatur liegt oder nicht, und
das Korrekturmittel die rückzuführende Abgasmenge niedrigen Drucks aus der Grundmenge des von dem Bestimmungsmittel für die rückzuführenden Abgasmenge bestimmten, rückzuführenden Abgases niedrigen Drucks während eines von dem Bestimmungsmittel bestimmten Zeitraums vermindert, in dem die Temperatur des rückzuführenden Abgases niedrigen Drucks über der ersten Bezugstemperatur liegt, wenn der Betriebszustand der Verbrennungskraftmaschine ein Betriebszustand, in dem die Rückführung von Abgas nur durch Verwendung des Abgasrückführungskanals niedrigen Drucks (23) erfolgt, oder ein Betriebszustand ist, in dem die Rückführung von Abgas durch Verwendung des sowohl des Abgasrückführungskanals niedrigen Drucks (23) als auch des Abgasrückführungskanals hohen Drucks (15) nach dem Ende des Ausführens des Temperaturerhöhungsvorgangs erfolgt.

3. Abgasreinigungssystem nach Anspruch 1, außerdem umfassend: einen Turbolader (10), der in dem Ansaugkanal (9) der Verbrennungskraftmaschine einen Verdichter (6) aufweist und in dem Abgaskanal (19) der Verbrennungskraftmaschine eine Turbine (7) besitzt, sowie ein Schaltmittel für das rückzuführende Abgas zum Rückführen von Abgas in die Verbrennungskraftmaschine durch wahlweise Verwendung von einem oder beiden von einem Abgasrückführungskanal niedrigen Drucks (23) und einem Abgasrückführungskanal hohen Drucks (15), aus denen der Abgasrückführungskanal (15, 23) besteht, gemäß dem Betriebszustand der Verbrennungskraftmaschine, wobei die Abgasreinigungsvorrichtung (32) in dem Abgaskanal (19) stromab der Turbine (7) vorgesehen ist und der Abgasrückführungskanal niedrigen Drucks (23) den Abgaskanal (19) stromab der Abgasreinigungsvorrichtung (32) und den Ansaugkanal (9) stromauf des Verdichters (6) verbindet und der Abgasrückführungskanal hohen Drucks (15) den Abgaskanal (19) stromauf der Turbine (7) und den Ansaugkanal (9) stromab des Verdichters (6) verbindet, wobei
das Bestimmungsmittel für die rückzuführende Abgasmenge die Grundmenge des rückzuführenden Abgases niedrigen Drucks, das über den Abgasrückführungskanal niedrigen Drucks (23) in die Verbrennungskraftmaschine rückgeführt wird, und die Grundmenge des rückzuführenden Abgases hohen Drucks, die über den Abgasrückführungskanal hohen Drucks (15) in die Verbrennungskraftmaschine rückgeführt wird, gemäß dem Betriebszustand der Verbrennungskraftmaschine bestimmt,
das Bestimmungsmittel bestimmt, ob die Temperatur des rückzuführenden Abgases hohen Drucks über einer vorgegebenen, zweiten Bezugstemperatur liegt oder nicht, und
das Korrekturmittel die rückzuführende Abgasmenge hohen Drucks aus der Grundmenge des von dem Bestimmungsmittel für die rückzuführenden Abgasmenge bestimmten, rückzuführenden Abgases hohen Drucks während eines von dem Bestimmungsmittel bestimmten Zeitraums vermindert, in dem die Temperatur des rückzuführenden Abgases hohen Drucks über der zweiten Bezugstemperatur liegt, wenn der Betriebszustand der Verbrennungskraftmaschine ein Betriebszustand ist, in dem die Rückführung von Abgas nur durch Verwendung des Abgasrückführungskanals hohen Drucks (15) erfolgt, oder ein Betriebszustand ist, in dem die Rückführung von Abgas durch Verwendung sowohl des Abgasrückführungskanals niedrigen Drucks (23) als auch des Abgasrückführungskanals hohen Drucks (15) nach dem Ende des Ausführens des Temperaturerhöhungsvorgangs erfolgt.

4. Abgasreinigungssystem nach Anspruch 2, wobei das Korrekturmittel die rückzuführende Abgasmenge niedrigen Drucks aus der Grundmenge des von dem Bestimmungsmittel für die rückzuführenden Abgasmenge bestimmten, rückzuführenden Abgases niedrigen Drucks vermindert und unter der Voraussetzung, daß die Temperatur des rückzuführenden Abgases hohen Drucks eine vorgegebene Zulassungsbedingung zum Vergrößern der rückzuführenden Abgasmenge hohen Drucks erfüllt, die Menge des rückzuführenden Abgases hohen Drucks aus der Grundmenge des von dem Bestimmungsmittel für die rückzuführenden Abgasmenge bestimmten, rückzuführenden Abgases hohen Drucks in dem von dem Bestimmungsmittel bestimmten Zeitraum vergrößert, in dem die Temperatur des rückzuführenden Abgases niedrigen Drucks über der ersten Bezugstemperatur liegt, wenn der Betriebszustand der Verbrennungskraftmaschine ein Betriebszustand ist, in dem die Rückführung von Abgas durch Verwendung sowohl des Abgasrückführungskanals niedrigen Drucks (23) als auch des Abgasrückführungskanals hohen Drucks (15) nach dem Ende des Ausführens des Temperaturerhöhungsvorgangs erfolgt.

5. Abgasreinigungssystem nach Anspruch 3, wobei das Korrekturmittel die rückzuführende Abgasmenge hohen Drucks aus der Grundmenge des von dem Bestimmungsmittel für die rückzuführenden Abgasmenge bestimmten, rückzuführenden Abgases hohen Drucks vermindert und unter der Voraussetzung, daß die Temperatur des rückzuführenden Abgases niedrigen Drucks eine vorgegebene Zulassungsbedingung zum Vergrößern der rückzuführenden Abgasmenge niedrigen Drucks erfüllt, die Menge des rückzuführenden Abgases niedrigen Drucks aus der Grundmenge des von dem Bestimmungsmittel für die rückzuführenden Abgasmenge bestimmten, rückzuführenden Abgases niedrigen Drucks in dem von dem Bestimmungsmittel bestimmten Zeitraum erhöht, in dem die Temperatur des rückzuführenden Abgases hohen Drucks über der zweiten Bezugstemperatur liegt, wenn der Betriebszustand der Verbrennungskraftmaschine ein Betriebszustand ist, in dem die Rückführung von Abgas durch Verwendung sowohl des Abgasrückführungskanals niedrigen Drucks (23) als auch des Abgasrückführungskanals hohen Drucks (15) nach dem Ende des Ausführens des Temperaturerhöhungsvorgangs erfolgt.

6. Abgasreinigungssystem nach Anspruch 1, wobei das Korrekturmittel eine Abnahmemenge in der Menge des rückzuführenden Abgases vermindert, wenn eine nach einem Endzeitpunkt des Temperaturerhöhungsvorgangs abgelaufene Zeit länger wird.

7. Abgasreinigungssystem nach Anspruch 2 oder 4, wobei das Korrekturmittel eine Abnahmemenge in der Menge des rückzuführenden Abgases niedrigen Drucks vermindert, wenn eine nach einem Endzeitpunkt des Temperaturerhöhungsvorgangs abgelaufene Zeit länger wird.

8. Abgasreinigungssystem nach Anspruch 3 oder 5, wobei das Korrekturmittel eine Abnahmemenge in der Menge des rückzuführenden Abgases hohen Drucks vermindert, wenn eine nach einem Endzeitpunkt des Temperaturerhöhungsvorgangs abgelaufene Zeit länger wird.

9. Abgasreinigungssystem nach Anspruch 4, wobei das Korrekturmittel eine Zunahmemenge in der Menge des rükzuführenden Abgases hohen Drucks vermindert, wenn eine nach einem Endzeitpunkt des Temperaturerhöhungsvorgangs abgelaufene Zeit länger wird.

10. Abgasreinigungssystem nach Anspruch 5, wobei das Korrekturmittel eine Zunahmemenge in der Menge des rückzuführenden Abgases niedrigen Drucks vermindert, wenn eine nach einem Endzeitpunkt des Temperaturerhöhungsvorgangs abgelaufene Zeit länger wird.

11. Abgasreinigungssystem nach Anspruch 4 oder 9, wobei die Zulassungsbedingung zum Vergrößern der rückzuführenden Abgasmenge hohen Drucks eine Bedingung für die Temperatur des rückzuführenden Abgases hohen Drucks ist, mit der eine NO_{X}-Produktionsmenge durch Vergrößern der Menge des rückzuführenden Abgases hohen Drucks verkleinert werden kann.

12. Abgasreinigungssystem nach Anspruch 5 oder 10, wobei die Zulassungsbedingung zum Vergrößern der rückzuführenden Abgasmenge niedrigen Drucks eine Bedingung für die Temperatur des rückzuführenden Abgases niedrigen Drucks ist, mit der eine NO_{X}-Produktionsmenge durch Vergrößern der Menge des rückzuführenden Abgases niedrigen Drucks verkleinert werden kann.

13. Abgasreinigungsverfahren für eine Verbrennungskraftmaschine, wobei die Verbrennungskraftmaschine umfaßt: einen Abgasrückführungskanal (15, 23), der einen Abgaskanal (19) der Verbrennungskraftmaschine und einen Ansaugkanal (9) der Verbrennungskraftmaschine verbindet, ein Bestimmungsmittel für die rückzuführende Abgasmenge zur Bestimmung einer Grundmenge des rückzuführenden Abgases, die gemäß einem Betriebszustand der Verbrennungskraftmaschine über den Abgasrückführungskanal (15, 23) in die Verbrennungskraftmaschine rückgeführt wird, eine Abgasreinigungsvorrichtung (32), die in dem Abgaskanal (19) vorgesehen ist, und ein Temperaturerhöhungsmittel zum Ausführen eines Temperaturerhöhungsvorgangs zum Erhöhen einer Temperatur der Abgasreinigungsvorrichtung (32), wobei das Abgasreinigungsverfahren **dadurch gekennzeichnet ist, daß** es umfaßt:
Bestimmen, ob eine Temperatur des rückzuführenden Abgases über einer vorgegebenen Bezugstemperatur liegt oder nicht, und
Vermindern der rückzuführenden Abgasmenge aus der Grundmenge des von dem Bestimmungsmittel für die rückzuführenden Abgasmenge bestimmten, rückzuführenden Abgases während eines bestimmten Zeitraums, in dem die Temperatur des rückzuführenden Abgases nach dem Ende des Temperaturerhöhungsvorgangs über der Bezugstemperatur liegt.

14. Abgasreinigungsverfahren nach Anspruch 13, wobei die Verbrennungskraftmaschine außerdem umfaßt: einen Turbolader (10), der in dem Ansaugkanal (9) der Verbrennungskraftmaschine einen Verdichter (6) aufweist und in dem Abgaskanal (19) der Verbrennungskraftmaschine eine Turbine (7) besitzt, sowie ein Schaltmittel für das rückzuführende Abgas zum Rückführen von Abgas in die Verbrennungskraftmaschine durch wahlweise Verwendung von einem oder beiden von einem Abgasrückführungskanal niedrigen Drucks (23) und einem Abgasrückführungskanal hohen Drucks (15), aus denen der Abgasrückführungskanal (15, 23) besteht, gemäß dem Betriebszustand der Verbrennungskraftmaschine, wobei die Abgasreinigungsvorrichtung (32) in dem Abgaskanal (19) stromab der Turbine (7) vorgesehen ist und der Abgasrückführungskanal niedrigen Drucks (23) den Abgaskanal (19) stromab der Abgasreinigungsvorrichtung (32) und den Ansaugkanal (9) stromauf des Verdichters (6) verbindet und der Abgasrückführungskanal hohen Drucks (15) den Abgaskanal (19) stromauf der Turbine (7) und den Ansaugkanal (9) stromab des Verdichters (6) verbindet, das Abgasreinigungsverfahren, wobei
die Grundmenge des rückzuführenden Abgases niedrigen Drucks, die über den Abgasrückführungskanal niedrigen Drucks (23) in die Verbrennungskraftmaschine rückgeführt wird, und die Grundmenge des rückzuführenden Abgases hohen Drucks, das über den Abgasrückführungskanal hohen Drucks (15) in die Verbrennungskraftmaschine rückgeführt wird, gemäß dem Betriebszustand der Verbrennungskraftmaschine bestimmt werden,
bestimmt wird, ob die Temperatur des rückzuführenden Abgases niedrigen Drucks über einer vorgegebenen, ersten Bezugstemperatur liegt oder nicht, und
die rückzuführende Abgasmenge niedrigen Drucks aus der Grundmenge des von dem Bestimmungsmittel für die rückzuführenden Abgasmenge bestimmten, rückzuführenden Abgases niedrigen Drucks während eines bestimmten Zeitraums vermindert wird, in dem die Temperatur des rückzuführenden Abgases niedrigen Drucks über der ersten Bezugstemperatur liegt, wenn der Betriebszustand der Verbrennungskraftmaschine ein Betriebszustand ist, in dem die Rückführung von Abgas nur durch Verwendung des Abgasrückführungskanals niedrigen Drucks (23) erfolgt, oder ein Betriebszustand ist, in dem die Rückführung von Abgas durch Verwendung sowohl des Abgasrückführungskanals niedrigen Drucks (23) als auch des Abgasrückführungskanals hohen Drucks (15) nach dem Ende des Ausführens des Temperaturerhöhungsvorgangs erfolgt.

15. Abgasreinigungsverfahren nach Anspruch 13, wobei die Verbrennungskraftmaschine außerdem umfaßt: einen Turbolader (10), der in dem Ansaugkanal (9) der Verbrennungskraftmaschine einen Verdichter (6) aufweist und in dem Abgaskanal (19) der Verbrennungskraftmaschine eine Turbine (7) besitzt, sowie ein Schaltmittel für das rückzuführende Abgas zum Rückführen von Abgas in die Verbrennungskraftmaschine durch wahlweise Verwendung von einem oder beiden von einem Abgasrückführungskanal niedrigen Drucks (23) und einem Abgasrückführungskanal hohen Drucks (15), aus denen der Abgasrückführungskanal (15, 23) besteht, gemäß dem Betriebszustand der Verbrennungskraftmaschine, wobei die Abgasreinigungsvorrichtung (32) in dem Abgaskanal (19) stromab der Turbine (7) vorgesehen ist und der Abgasrückführungskanal niedrigen Drucks (23) den Abgaskanal (19) stromab der Abgasreinigungsvorrichtung (32) und den Ansaugkanal (9) stromauf des Verdichters (6) verbindet und der Abgasrückführungskanal hohen Drucks (15) den Abgaskanal (19) stromauf der Turbine (7) und den Ansaugkanal (9) stromab des Verdichters (6) verbindet, das Abgasreinigungsverfahren, wobei
die Grundmenge des rückzuführenden Abgases niedrigen Drucks, die über den Abgasrückführungskanal niedrigen Drucks (23) in die Verbrennungskraftmaschine rückgeführt wird, und die Grundmenge des rückzuführenden Abgases hohen Drucks, die über den Abgasrückführungskanal hohen Drucks (15) in die Verbrennungskraftmaschine rückgeführt wird, gemäß dem Betriebszustand der Verbrennungskraftmaschine bestimmt werden,
bestimmt wird, ob die Temperatur des rückzuführenden Abgases hohen Drucks über einer vorgegebenen, zweiten Bezugstemperatur liegt oder nicht, und
die rückzuführende Abgasmenge hohen Drucks aus der Grundmenge des von dem Bestimmungsmittel für die rückzuführenden Abgasmenge bestimmten, rückzuführenden Abgases hohen Drucks während eines bestimmten Zeitraums vermindert wird, in dem die Temperatur des rückzuführenden Abgases hohen Drucks über der zweiten Bezugstemperatur liegt, wenn der Betriebszustand der Verbrennungskraftmaschine ein Betriebszustand ist, in dem die Rückführung von Abgas nur durch Verwendung des Abgasrückführungskanals hohen Drucks (15) erfolgt, oder ein Betriebszustand ist, in dem die Rückführung von Abgas durch Verwendung des Abgasrückführungskanals niedrigen Drucks (23) wie auch des Abgasrückführungskanals hohen Drucks (15) nach dem Ende des Ausführens des Temperaturerhöhungsvorgangs erfolgt.

16. Abgasreinigungsverfahren nach Anspruch 14, wobei die rückzuführende Abgasmenge niedrigen Drucks aus der Grundmenge des von dem Bestimmungsmittel für die rückzuführenden Abgasmenge bestimmten, rückzuführenden Abgases niedrigen Drucks vermindert wird und unter der Voraussetzung, daß die Temperatur des rückzuführenden Abgases hohen Drucks eine vorgegebene Zulassungsbedingung zum Vergrößern der rückzuführenden Abgasmenge hohen Drucks erfüllt, die Menge des rückzuführenden Abgases hohen Drucks aus der Grundmenge des von dem Bestimmungsmittel für die rückzuführenden Abgasmenge bestimmten, rückzuführenden Abgases hohen Drucks in dem bestimmten Zeitraum erhöht wird, in dem die Temperatur des rückzuführenden Abgases niedrigen Drucks über der ersten Bezugstemperatur liegt, wenn der Betriebszustand der Verbrennungskraftmaschine ein Betriebszustand ist, in dem die Rückführung von Abgas durch Verwendung sowohl des Abgasrückführungskanals niedrigen Drucks (23) als auch des Abgasrückführungskanals hohen Drucks (15) nach dem Ende des Ausführens des Temperaturerhöhungsvorgangs erfolgt.

17. Abgasreinigungsverfahren nach Anspruch 15, wobei die rückzuführenden Abgasmenge hohen Drucks aus der Grundmenge des von dem Bestimmungsmittel für die rückzuführenden Abgasmenge bestimmten, rückzuführenden Abgases hohen Drucks vermindert wird und unter der Voraussetzung, daß die Temperatur des rückzuführenden Abgases niedrigen Drucks eine vorgegebene Zulassungsbedingung zum Vergrößern der rückzuführendes Abgasmenge niedrigen Drucks erfüllt, die Menge des rückzuführenden Abgases niedrigen Drucks aus der Grundmenge des von dem Bestimmungsmittel für die rückzuführenden Abgasmenge bestimmten, rückzuführenden Abgases niedrigen Drucks in dem bestimmten Zeitraum erhöht wird, in dem die Temperatur des rückzuführenden Abgases hohen Drucks über der zweiten Bezugstemperatur liegt, wenn der Betriebszustand der Verbrennungskraftmaschine ein Betriebszustand ist, in dem die Rückführung von Abgas durch Verwendung sowohl des Abgasrückführungskanals niedrigen Drucks (23) als auch des Abgasrückführungskanals hohen Drucks (15) nach dem Ende des Ausführens des Temperaturerhöhungsvorgangs erfolgt.

18. Abgasreinigungsverfahren nach Anspruch 13, wobei eine Abnahmemenge in der Menge des rückzuführenden Abgases vermindert wird, wenn eine nach einem Endzeitpunkt des Temperaturerhöhungsvorgangs abgelaufene Zeit länger wird.

19. Abgasreinigungsverfahren nach Anspruch 14 oder 16, wobei eine Abnahmemenge in der Menge des rückzuführenden Abgases niedrigen Drucks vermindert wird, wenn eine nach einem Endzeitpunkt des Temperaturerhöhungsvorgangs abgelaufene Zeit länger wird.

20. Abgasreinigungsverfahren nach Anspruch 15 oder 17, wobei eine Abnahmemenge in der Menge des rückzuführenden Abgases hohen Drucks vermindert wird, wenn eine nach einem Endzeitpunkt des Temperaturerhöhungsvorgangs abgelaufene Zeit länger wird.

21. Abgasreinigungsverfahren nach Anspruch 16, wobei eine Zunahmemenge in der Menge des rückzuführenden Abgases hohen Drucks vermindert wird, wenn eine nach einem Endzeitpunkt des Temperaturerhöhungsvorgangs abgelaufene Zeit länger wird.

22. Abgasreinigungsverfahren nach Anspruch 17, wobei eine Zunahmemenge in der Menge des rückzuführenden Abgases niedrigen Drucks vermindert wird, wenn eine nach einem Endzeitpunkt des Temperaturerhöhungsvorgangs abgelaufene Zeit zunimmt.

23. Abgasreinigungsverfahren nach Anspruch 16 oder 21, wobei die Zulassungsbedingung zum Vergrößern der rückzuführenden Abgasmenge hohen Drucks eine Bedingung für die Temperatur des rückzuführenden Abgases hohen Drucks ist, mit der eine No_{X}-Produktionsmenge durch Vergrößern der Menge des rückzuführenden Abgases hohen Drucks vermindert werden kann.

24. Abgasreinigungsverfahren nach Anspruch 17 oder 22, wobei die Zulassungsbedingung zum Vergrößern der rückzuführenden Abgasmenge niedrigen Drucks eine Bedingung für die Temperatur des rückzuführenden Abgases niedrigen. Drucks ist, mit der eine No_{X}-Produktionsmenge durch Vergrößern der Menge des rückzuführenden Abgases niedrigen Drucks verkleinert werden kann.

## Revendications

1. Système de purification d'échappement d'un moteur à combustion interne, comprenant un passage de EGR (de recirculation des gaz d'échappement) (15, 23) qui raccorde un passage d'échappement (19) du moteur à combustion interne et un passage d'admission (9) du moteur à combustion interne ; des moyens de détermination de quantité de gaz EGR pour déterminer une quantité de base des gaz EGR recirculés dans le moteur à combustion interne via le passage EGR (15, 23) selon un état de fonctionnement du moteur à combustion interne ; un dispositif de purification d'échappement (32) prévu dans le passage d'échappement (19) ; et des moyens de montée en température pour réaliser un procédé de montée en température consistant à faire monter une température du dispositif de purification d'échappement (32), le système de purification d'échappement étant **caractérisé en ce qu'**il comprend :
des moyens de détermination pour déterminer si une température des gaz EGR est supérieure à une température de référence prédéterminée ou pas ; et
des moyens de correction pour diminuer la quantité de gaz EGR par rapport à la quantité de base des gaz EGR déterminée par les moyens de détermination de quantité de gaz EGR, pendant une période pendant laquelle on détermine grâce aux moyens de détermination que la température du gaz EGR est supérieure à la température de référence après l'achèvement du procédé de montée en température.

2. Système de purification d'échappement selon la revendication 1, comprenant en outre : un turbocompresseur (10) qui a un compresseur (6) sur le passage d'admission (9) du moteur à combustion interne et qui a une turbine (7) sur le passage d'échappement (19) du moteur à combustion interne ; et des moyens de commutation de EGR pour faire recirculer les gaz d'échappement dans le moteur à combustion interne en utilisant sélectivement un ou les deux parmi un passage de EGR à basse pression (23) et un passage de EGR à haute pression (15) qui composent le passage de EGR (15, 23) selon l'état de fonctionnement du moteur à combustion interne, dans lequel le dispositif de purification d'échappement (32) est prévu dans le passage d'échappement (19) en aval de la turbine (7) et le passage de EGR à basse pression (23) raccorde le passage d'échappement (19) en aval du dispositif de purification d'échappement (32) et le passage d'admission (9) en amont du compresseur (6) et le passage de EGR à haute pression (15) raccorde le passage d'échappement (19) en amont de la turbine (7) et le passage d'admission (9) en aval du compresseur (6), dans lequel :
les moyens de détermination de quantité de gaz EGR déterminent la quantité de base des gaz EGR à basse pression recirculés dans le moteur à combustion interne via le passage de EGR à basse pression (23) et la quantité de base des gaz EGR à haute pression recirculés dans le moteur à combustion interne via le passage de EGR à haute pression (15) selon l'état de fonctionnement du moteur à combustion interne,
les moyens de détermination déterminent si la température des gaz EGR à basse pression est supérieure à une première température de référence prédéterminée ou pas, et
les moyens de correction diminuent la quantité de gaz EGR à basse pression par rapport à la quantité de base de gaz EGR à basse pression déterminée par les moyens de détermination de quantité de gaz EGR pendant une période pendant laquelle on détermine grâce aux moyens de détermination que la température des gaz EGR à basse pression est supérieure à la première température de référence lorsque l'état de fonctionnement du moteur à combustion interne est dans un état de fonctionnement dans lequel la recirculation des gaz d'échappement est réalisée en utilisant uniquement le passage de EGR à basse pression (23) ou un état de fonctionnement dans lequel la recirculation des gaz d'échappement est réalisée en utilisant à la fois le passage de EGR à basse pression (23) et le passage de EGR à haute pression (15) après l'achèvement de la réalisation du procédé de montée en température.

3. Système de purification d'échappement selon la revendication 1, comprenant en outre : un turbocompresseur (10) qui a un compresseur (6) sur le passage d'admission (9) du moteur à combustion interne et qui a une turbine (7) sur le passage d'échappement (19) du moteur à combustion interne ; et des moyens de commutation de EGR pour faire recirculer les gaz d'échappement dans le moteur à combustion interne en utilisant sélectivement un ou les deux parmi un passage de EGR à basse pression (23) et un passage de EGR à haute pression (15) qui composent le passage de EGR (15, 23) selon l'état de fonctionnement du moteur à combustion interne, dans lequel le dispositif de purification d'échappement (32) est prévu dans le passage d'échappement (19) en aval de la turbine (7) et le passage de EGR à basse pression (23) raccorde le passage d'échappement (19) en aval du dispositif de purification d'échappement (32) et le passage d'admission (9) en amont du compresseur (6), et le passage de EGR à haute pression (15) raccorde le passage d'échappement (19) en amont de la turbine (7) et le passage d'admission (9) en aval du compresseur (6), dans lequel :
les moyens de détermination de quantité de gaz EGR déterminent la quantité de base des gaz EGR à basse pression recirculés dans le moteur à combustion interne via le passage de EGR à basse pression (23) et la quantité de base des gaz EGR à haute pression recirculés dans le moteur à combustion interne via le passage de EGR à haute pression (15) selon l'état de fonctionnement du moteur à combustion interne,
les moyens de détermination déterminent si la température des gaz EGR à haute pression est supérieure à une seconde température de référence prédéterminée ou pas, et
les moyens de correction diminuent la quantité de gaz EGR à haute pression par rapport à la quantité de base des gaz EGR à haute pression déterminés par les moyens de détermination de quantité de gaz EGR pendant une période pendant laquelle on détermine grâce aux moyens de détermination que la température des gaz EGR à haute pression est supérieure à la seconde température de référence, lorsque l'état de fonctionnement du moteur à combustion interne est un état de fonctionnement dans lequel la recirculation des gaz d'échappement est réalisée en utilisant uniquement le passage de EGR à haute pression (15) ou un état de fonctionnement dans lequel la recirculation des gaz d'échappement est réalisée en utilisant à la fois le passage de EGR à basse pression (23) et le passage de EGR à haute pression (15) après l'achèvement de la réalisation du procédé de montée en température.

4. Système de purification d'échappement selon la revendication 2, dans lequel les moyens de correction diminuent la quantité de gaz EGR à basse pression par rapport à la quantité de base des gaz EGR à basse pression déterminée par les moyens de détermination de quantité de gaz EGR et, pourvu que la température des gaz EGR à haute pression satisfait une condition d'autorisation d'augmentation de EGR à haute pression prédéterminée, augmentent la quantité des gaz EGR à haute pression par rapport à la quantité de base des gaz EGR à haute pression déterminée par les moyens de détermination de quantité de gaz EGR, pendant la période pendant laquelle on détermine grâce aux moyens de détermination que la température des gaz EGR à basse pression est supérieure à la première température de référence lorsque l'état de fonctionnement du moteur à combustion interne est un état de fonctionnement dans lequel la recirculation des gaz d'échappement est réalisée en utilisant à la fois le passage de EGR à basse pression (23) et le passage de EGR à haute pression (15) après l'achèvement de la réalisation du procédé de montée en température.

5. Système de purification d'échappement selon la revendication 3, dans lequel les moyens de correction diminuent la quantité des gaz EGR à haute pression par rapport à la quantité de base des gaz EGR à haute pression déterminée par les moyens de détermination de quantité de gaz EGR et, pourvu que la température des gaz EGR à basse pression satisfait une condition d'autorisation d'augmentation de EGR à basse pression prédéterminée, augmentent la quantité des gaz EGR à basse pression par rapport à la quantité de base des gaz EGR à basse pression déterminée par les moyens de détermination de quantité de gaz EGR, pendant la période pendant laquelle on détermine grâce aux moyens de détermination que la température des gaz EGR à haute pression est supérieure à la seconde température de référence lorsque l'état de fonctionnement du moteur à combustion interne est un état de fonctionnement dans lequel la recirculation des gaz d'échappement est réalisée en utilisant à la fois le passage de EGR à basse pression (23) et le passage de EGR à haute pression (15) après l'achèvement de la réalisation du procédé de montée en température.

6. Système de purification d'échappement selon la revendication 1, dans lequel les moyens de correction diminuent une quantité de diminution de la quantité de gaz EGR au fur et à mesure qu'un temps écoulé suite à un point temporel de fin du procédé de montée en température augmente.

7. Système de purification d'échappement selon la revendication 2 ou 4, dans lequel les moyens de correction diminuent une quantité de diminution de la quantité de gaz EGR à basse pression au fur et à mesure qu'un temps écoulé suite à un point temporel de fin du procédé de montée en température augmente.

8. Système de purification d'échappement selon la revendication 3 ou 5, dans lequel les moyens de correction diminuent une quantité de diminution de la quantité de gaz EGR à haute pression au fur et à mesure qu'un temps écoulé suite à un point temporel de fin du procédé de montée en température augmente.

9. Système de purification d'échappement selon la revendication 4, dans lequel les moyens de correction diminuent une quantité d'augmentation de la quantité des gaz EGR à haute pression au fur et à mesure qu'un temps écoulé suite à un point temporel de fin du procédé de montée en température augmente.

10. Système de purification d'échappement selon la revendication 5, dans lequel les moyens de correction diminuent une quantité d'augmentation de la quantité des gaz EGR à basse pression au fur et à mesure qu'un temps écoulé suite à un point temporel de fin du procédé de montée en température augmente.

11. Système de purification d'échappement selon la revendication 4 ou 9, dans lequel la condition d'autorisation d'augmentation de EGR à haute pression est une condition de la température des gaz EGR à haute pression qui permet de réduire une quantité de production de NOx en augmentant la quantité de gaz EGR à haute pression.

12. Système de purification d'échappement selon la revendication 5 ou 10, dans lequel la condition d'autorisation d'augmentation de EGR à basse pression est une condition de la température des gaz EGR à basse pression qui permet de réduire une quantité de production de NOx en augmentant la quantité de gaz EGR à basse pression.

13. Procédé de purification d'échappement d'un moteur à combustion interne, dans lequel le moteur à combustion interne comprend : un passage de EGR (15, 23) qui raccorde un passage d'échappement (19) du moteur à combustion interne et un passage d'admission (9) du moteur à combustion interne ; des moyens de détermination de quantité de gaz EGR pour déterminer une quantité de base de gaz EGR recirculés dans le moteur à combustion interne via le passage de EGR (15, 23) selon un état de fonctionnement du moteur à combustion interne ; un dispositif de purification d'échappement (32) prévu dans le passage d'échappement (19) ; et des moyens de montée en température pour réaliser un procédé de montée en température consistant à faire monter une température du dispositif de purification d'échappement (32), le procédé de purification d'échappement étant **caractérisé en ce qu'**il comprend les étapes consistant à :
déterminer si une température des gaz EGR est supérieure à une température de référence prédéterminée ou pas ; et
diminuer la quantité de gaz EGR par rapport à la quantité de base de gaz EGR déterminée par les moyens de détermination de quantité de gaz EGR, pendant une période pendant laquelle on détermine que la température des gaz EGR est supérieure à la température de référence après l'achèvement du procédé de montée en température.

14. Procédé de purification d'échappement selon la revendication 13, dans lequel le moteur à combustion interne comprend en outre : un turbocompresseur (10) qui a un compresseur (6) sur le passage d'admission (9) du moteur à combustion interne et qui a une turbine (7) sur le passage d'échappement (19) du moteur à combustion interne ; et des moyens de commutation de EGR pour faire recirculer les gaz d'échappement dans le moteur à combustion interne en utilisant sélectivement un ou les deux parmi un passage de EGR à basse pression (23) et un passage de EGR à haute pression (15) qui composent le passage de EGR (15, 23) selon l'état de fonctionnement du moteur à combustion interne, dans lequel le dispositif de purification d'échappement (32) est prévu dans le passage d'échappement (19) en aval de la turbine (7), et le passage de EGR à basse pression (23) raccorde le passage d'échappement (19) en aval du dispositif de purification d'échappement (32) et le passage d'admission (9) en amont du compresseur (6) et le passage de EGR à haute pression (15) raccorde le passage d'échappement (19) en amont de la turbine (7) et le passage d'admission (9) en aval du compresseur (6), procédé de purification d'échappement dans lequel :
la quantité de base des gaz EGR à basse pression recirculés dans le moteur à combustion interne via le passage de EGR à basse pression (23) et la quantité de base des gaz EGR à haute pression recirculés dans le moteur à combustion interne via le passage de EGR à haute pression (15) selon l'état de fonctionnement du moteur à combustion interne sont déterminées,
on détermine si la température des gaz EGR à basse pression est supérieure à une première température de référence prédéterminée ou pas, et
la quantité des gaz EGR à basse pression est diminuée par rapport à la quantité de base des gaz EGR à basse pression déterminée par les moyens de détermination de quantité de gaz EGR pendant une période pendant laquelle on détermine que la température des gaz EGR à basse pression est supérieure à la première température de référence lorsque l'état de fonctionnement du moteur à combustion interne est un état de fonctionnement dans lequel la recirculation des gaz d'échappement est réalisée en utilisant uniquement le passage de EGR à basse pression (23) ou un état de fonctionnement dans lequel la recirculation des gaz d'échappement est réalisée en utilisant à la fois le passage de EGR à basse pression (23) et le passage de EGR à haute pression (15) après l'achèvement de la réalisation du procédé de montée en température.

15. Procédé de purification d'échappement selon la revendication 13, dans lequel le moteur à combustion interne comprend en outre : un turbocompresseur (10) qui a un compresseur (6) sur le passage d'admission (9) du moteur à combustion interne et qui a une turbine (7) sur le passage d'échappement (19) du moteur à combustion interne ; et des moyens de commutation de EGR pour faire recirculer les gaz d'échappement dans le moteur à combustion interne en sélectionnant un ou les deux parmi un passage de EGR à basse pression (23) et un passage de EGR à haute pression (15) qui composent le passage de EGR (15, 23) selon l'état de fonctionnement du moteur à combustion interne, dans lequel le dispositif de purification d'échappement (32) est prévu dans le passage d'échappement (19) en aval de la turbine (7), et le passage de EGR à basse pression (23) raccorde le passage d'échappement (19) en aval du dispositif de purification d'échappement (32) et le passage d'admission (9) en amont du compresseur (6) et le passage de EGR à haute pression (15) raccorde le passage d'échappement (19) en amont de la turbine (7) et le passage d'admission (9) en aval du compresseur (6), procédé de purification d'échappement dans lequel :
la quantité de base des gaz EGR à basse pression recirculés dans le moteur à combustion interne via le passage de EGR à basse pression (23) et la quantité de base des gaz EGR à haute pression recirculés dans le moteur à combustion interne via le passage de EGR à haute pression (15) selon l'état de fonctionnement du moteur à combustion interne sont déterminées,
on détermine si la température des gaz EGR à haute pression est supérieure à une seconde température de référence prédéterminée ou pas, et
la quantité des gaz EGR à haute pression est diminuée par rapport à la quantité de base des gaz EGR à haute pression déterminée par les moyens de détermination de quantité de gaz EGR pendant une période pendant laquelle on détermine que la température des gaz EGR à haute pression est supérieure à la seconde température de référence lorsque l'état de fonctionnement du moteur à combustion interne est un état de fonctionnement dans lequel la recirculation des gaz d'échappement est réalisée en utilisant uniquement le passage de EGR à haute pression (15) ou un état de fonctionnement dans lequel la recirculation des gaz d'échappement est réalisée en utilisant à la fois le passage de EGR à basse pression (23) et le passage de EGR à haute pression (15) après l'achèvement de la réalisation du procédé de montée en température.

16. Procédé de purification d'échappement selon la revendication 14, dans lequel la quantité de gaz EGR à basse pression est diminuée par rapport à la quantité de base des gaz EGR à basse pression déterminée par les moyens de détermination de quantité de gaz EGR et, pourvu que la température des gaz EGR à haute pression satisfait une condition d'autorisation d'augmentation de EGR à haute pression, la quantité des gaz EGR à haute pression est augmentée par rapport à la quantité de base des gaz EGR à haute pression déterminée par les moyens de détermination de quantité de gaz EGR, pendant la période pendant laquelle on détermine que la température des gaz EGR à basse pression est supérieure à la première température de référence lorsque l'état de fonctionnement du moteur à combustion interne est un état de fonctionnement dans lequel la recirculation des gaz d'échappement est réalisée en utilisant à la fois le passage de EGR à basse pression (23) et le passage de EGR à haute pression (15) après l'achèvement de la réalisation du procédé de montée en température.

17. Procédé de purification d'échappement selon la revendication 15, dans lequel la quantité de gaz EGR à haute pression est diminuée par rapport à la quantité de base des gaz EGR à haute pression déterminée par les moyens de détermination de quantité de gaz EGR et, pourvu que la température des gaz EGR à basse pression satisfait une condition d'autorisation d'augmentation de EGR à basse pression, la quantité de gaz EGR à basse pression est augmentée par rapport à la quantité de base des gaz EGR à basse pression déterminée par les moyens de détermination de quantité de gaz EGR, pendant la période pendant laquelle on détermine que la température des gaz EGR à haute pression est supérieure à la seconde température de référence lorsque l'état de fonctionnement du moteur à combustion interne est un état de fonctionnement dans lequel la recirculation des gaz d'échappement est réalisée en utilisant à la fois le passage de EGR à basse pression (23) et le passage de EGR à haute pression (15) après l'achèvement de la réalisation du procédé de montée en température.

18. Procédé de purification d'échappement selon la revendication 13, dans lequel une quantité de diminution de la quantité de gaz EGR est diminuée au fur et à mesure qu'un temps écoulé suite à un point temporel de fin du procédé de montée en température augmente.

19. Procédé de purification d'échappement selon la revendication 14 ou 16, dans lequel une quantité de diminution de la quantité de gaz EGR à basse pression est diminuée au fur et à mesure qu'un temps écoulé suite à un point temporel de fin du procédé de montée en température augmente.

20. Procédé de purification d'échappement selon la revendication 15 ou 17, dans lequel une quantité de diminution de la quantité de gaz EGR à haute pression est diminuée au fur et à mesure qu'un temps écoulé suite à un point temporel de fin du procédé de montée en température augmente.

21. Procédé de purification d'échappement selon la revendication 16, dans lequel une quantité d'augmentation de la quantité de gaz EGR à haute pression est diminuée au fur et à mesure qu'un temps écoulé suite à un point temporel de fin du procédé de montée en température augmente.

22. Procédé de purification d'échappement selon la revendication 17, dans lequel une quantité d'augmentation de la quantité de gaz EGR à basse pression est diminuée au fur et à mesure qu'un temps écoulé suite à un point temporel de fin du procédé de montée en température augmente.

23. Procédé de purification d'échappement selon la revendication 16 ou 21, dans lequel la condition d'autorisation d'augmentation de EGR à haute pression est une condition de la température des gaz EGR à haute pression qui permet de réduire une quantité de production de NOx en augmentant la quantité de gaz EGR à haute pression.

24. Procédé de purification d'échappement selon la revendication 17 ou 22, dans lequel la condition d'autorisation d'augmentation de EGR à basse pression est une condition de la température des gaz EGR à basse pression qui permet de réduire une quantité de production de NOx en augmentant la quantité de gaz EGR à basse pression.
